# EUROPEAN PATENT SPECIFICATION

(11) **EP 3 148 161 B1**
(45) Date of publication and mention of the grant of the patent: **10.07.2019**
(21) Application number: 16190547.6
(22) Date of filing: 26.09.2016
(51) Int. Cl.: H04W 48/10, H04W 4/80, H04W 76/14, H04W 12/02, H04W 84/18

(54) **MESSAGE TRANSMISSION METHOD, MESSAGE RECEPTION METHOD AND APPARATUS, COMPUTER PROGRAM AND RECORDING MEDIUM**
NACHRICHTENÜBERTRAGUNGSVERFAHREN, NACHRICHTENEMPFANGSVERFAHREN UND -VORRICHTUNG, COMPUTERPROGRAMM UND AUFZEICHNUNGSMEDIUM
PROCÉDÉ DE TRANSMISSION DE MESSAGE, PROCÉDÉ ET APPAREIL DE RÉCEPTION DE MESSAGE, PROGRAMME INFORMATIQUE ET SUPPORT D'ENREGISTREMENT

(30) Priority: 28.09.2015 CN 201510628252
(43) Date of publication of application: 29.03.2017
(73) Proprietor: Xiaomi Inc., Beijing 100085 (CN)
(72) Inventor: DING, Yi, Beijing 100085 (CN); HOU, Enxing, Beijing 100085 (CN); ZHU, Kanjie, Beijing 100085 (CN)
(74) Representative: Underwood, Nicolas Patrick

(56) References cited:
- US-A1- 2002 194 141
- US-A1- 2013 109 323
- US-A1- 2014 323 048
- US-A1- 2014 362 728
- Kevin Townsend ET AL: "Getting Started with Bluetooth Low Energy" In: "Getting Started with Bluetooth Low Energy", 12 May 2014 (2014-05-12), O'Reilly Media, Inc., XP055206773, ISBN: 978-1-49-194951-1 pages 1-180, * page 53 * * page 67 - page 68 * * page 19 - page 22 *

## Description

### TECHNICAL FIELD

The present invention generally relates to the field of communications, and more particularly, relates to a message transmission method, a message reception method and apparatus, a computer program and a recording medium.

### BACKGROUND

Bluetooth technologies are widely used wireless communication technologies. For example, many electronic devices, such as Bluetooth headphones, Bluetooth loudspeaker boxes, Bluetooth anti-drop devices, Bluetooth bracelets and the like, use Bluetooth technologies.

Two devices that use Bluetooth technologies need to establish a Bluetooth connection to allow information interaction and wireless control therebetween. However, the transmission and reception efficiency is low. Kevin Townsend, in a book titled "Getting Started with Bluetooth Low Energy", provides an introduction into the protocol-prescribed beaconing frames, known as advertising packets. More particular, a distinction is made between a directed advertising frame which containers the target Bluetooth address in its payload but no user data, and an undirected advertising frame which is not targeted at any particular scanner device but may contain user data in its payload. United States Patent Application Publication US 2014/0362728 teaches the usage of a Bluetooth Low Energy advertising frame comprising user identification information in encrypted form, as well as manufacturer-specific customizeable data - all associated with the broadcasting device. United States Patent Application Publication US 2013/0109323 discloses the usage of a Bluetooth Low Energy directed advertising frame (ADV_DIRECT_IND), wherein a recipient address is included. Beaconing device only accepts a connection request from the remote device whose address is contained in the ADV_DIRECT_IND PDU. No further data is included in that PDU. Filtering policy on the host of scanning device - link Layer of a device- further processes advertising PDUs only from devices in a white list and ignores all other beaconing frames. United States Patent Application Publication US 2002/0194141 discloses the usage in a Bluetooth inquiry beacon of an identifier associated with a portable device. When a device detects such a broadcasted inquiry message, it responds with its own identifier. An Action is taken when there is a match. United States Patent Application Publication US 2014/0323048 discloses the generation of a Bluetooth Low Energy beacon frame in accordance with a usage purpose - either as a directed advertising indication frame or a non-directed one.

### SUMMARY

To overcome the above problems in the related arts, the present invention provides a message transmission method, a message reception method and apparatus, a computer program and a recording medium.

According to a first aspect of embodiments of the present invention, there is provided message transmission method, which is applied to a first Bluetooth device and comprises:
generating a Bluetooth beacon frame message based on an interaction purpose with a second Bluetooth device; and;
broadcasting the Bluetooth beacon frame message;
wherein the Bluetooth beacon frame message contains a field indicating the interaction purpose.

According to one embodiment, the Bluetooth beacon frame message contains a service information field; and
the service information field comprises at least one of current operation data of the first Bluetooth device and message composition information of the Bluetooth beacon frame message.

Since the Bluetooth beacon frame message contains a service information field, this method can allow the second Bluetooth device to acquire the current operation data of the first Bluetooth device and/or message composition information, even if a Bluetooth connection between the first and second Bluetooth devices is not established.

According to one embodiment, the service information field comprises at least one of:
a first bit indicating whether the first Bluetooth device has been bound with another Bluetooth device;
a second bit indicating whether the first Bluetooth device has established a Bluetooth connection with another Bluetooth device;
a third bit indicating whether the first Bluetooth device is a central device or a peripheral device;
a fourth bit indicating whether the Bluetooth beacon frame message has been encrypted;
a fifth bit indicating whether the Bluetooth beacon frame message carries a medium access control (MAC) address of the first Bluetooth device;
a sixth bit indicating whether the Bluetooth beacon frame message carries a capability field;
a seventh bit indicating whether the Bluetooth beacon frame message carries an event information field; and
an eighth bit indicating whether the Bluetooth beacon frame message carries manufacturer-defined data.

According to one embodiment, the Bluetooth beacon frame message comprises a capability field indicating capabilities of the first Bluetooth device.

According to one embodiment, the capability field comprises at least one of:
a ninth bit indicating whether the first Bluetooth device has a capability to establish a Bluetooth connection;
a tenth bit indicating whether the first Bluetooth device has a capability to serve as a central device;
an eleventh bit indicating whether the first Bluetooth device has an encryption capability; and
a twelfth bit indicating whether the first Bluetooth device has input and output capabilities.

Since the Bluetooth beacon frame message comprises a capability field, this method can allow the second Bluetooth device to acquire the capabilities of the first Bluetooth device, even if a Bluetooth connection between the first and second Bluetooth devices is not established.

According to one embodiment, the Bluetooth beacon frame message comprises an event information field comprising an event instruction for controlling the second Bluetooth device.

Optionally, the event information field comprises:
an event identification field indicating the second Bluetooth device; and
an event instruction indicating an event to be executed by the second Bluetooth device.

According to one embodiment, the event information field comprises:
an event instruction indicating an event to be executed by a default second Bluetooth device.

Since the Bluetooth beacon frame message comprises an event information field, this method can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

According to one embodiment, the Bluetooth beacon frame message further comprises a device identification field indicating a device name of the first Bluetooth device.

According to one embodiment, the Bluetooth beacon frame message further comprises a MAC address field indicating a MAC address of the first Bluetooth device.

According to one embodiment, the Bluetooth beacon frame message further comprises a frame control field comprising at least one of:
a thirteenth bit indicating whether the Bluetooth beacon frame message carries manufacturer-defined subtitle data; and
a fourteenth bit indicating whether the Bluetooth beacon frame message is a binding acknowledgement message.

According to one embodiment, the Bluetooth beacon frame message further comprises a frame counter field indicating a frame sequence of the Bluetooth beacon frame message.

Since the Bluetooth beacon frame message further comprises a frame counter field in this method, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

According to a second aspect of the embodiments of the present invention, there is provided a message reception method, which is applied to a second Bluetooth device and comprises:
receiving a Bluetooth beacon frame message broadcast by a first Bluetooth device, the Bluetooth beacon frame message containing a field indicating an interaction purpose; and
processing the field in the Bluetooth beacon frame message.

According to one embodiment, the Bluetooth beacon frame message comprises a service information field; and
said processing the field in the Bluetooth beacon frame message comprises:
acquiring current operation data of the first Bluetooth device based on the service information field;
or acquiring message composition information of the Bluetooth beacon frame message based on the service information field;
or acquiring current operation data of the first Bluetooth device based on the service information field, and acquiring message composition information of the Bluetooth beacon frame message based on the service information field.

Since the Bluetooth beacon frame message contains a service information field, this method can allow the second Bluetooth device to acquire the current operation data of the first Bluetooth device and/or message composition information, even if a Bluetooth connection between the first and second Bluetooth devices is not established.

According to one embodiment, said acquiring current operation data of the first Bluetooth device based on the service information field comprises at least one step of:
acquiring whether the first Bluetooth device has been bound with another Bluetooth device based on a first bit of the service information field;
acquiring whether the first Bluetooth device has established a Bluetooth connection with another Bluetooth device based on a second bit of the service information field; and
acquiring whether the first Bluetooth device is a central device or a peripheral device based on a third bit of the service information field.

According to one embodiment, said acquiring message composition information of the Bluetooth beacon frame message based on the service information field comprises at least one step of:
acquiring whether the Bluetooth beacon frame message has been encrypted based on a fourth bit of the service information field;
acquiring whether the Bluetooth beacon frame message carries a MAC address of the first Bluetooth device based on a fifth bit of the service information field;
acquiring whether the Bluetooth beacon frame message carries a capability field based on a sixth bit of the service information field;
acquiring whether the Bluetooth beacon frame message carries an event information field based on a seventh bit of the service information field; and
acquiring whether the Bluetooth beacon frame message carries manufacturer-defined data based on an eighth bit of the service information field.

According to one embodiment, the Bluetooth beacon frame message comprises a capability field; and
said processing the field in the Bluetooth beacon frame message comprises acquiring the capabilities of the first Bluetooth device based on the capability field.

According to one embodiment, said acquiring the capabilities of the first Bluetooth device based on the capability field comprises at least one step of:
acquiring whether the first Bluetooth device has a capability to establish a Bluetooth connection based on a ninth bit of the capability field;
acquiring whether the first Bluetooth device has a capability to serve as a central device based on a tenth bit of the capability field;
acquiring whether the first Bluetooth device has an encryption capability based on an eleventh bit of the capability field;
acquiring whether the first Bluetooth device has input and output capabilities based on a twelfth bit of the capability field.

Since the Bluetooth beacon frame message comprises a capability field, this method can allow the second Bluetooth device to acquire the capabilities of the first Bluetooth device, even if a Bluetooth connection between the first and second Bluetooth devices is not established.

According to one embodiment, the Bluetooth beacon frame message comprises an event information field, and
processing the field in the Bluetooth beacon frame message comprises: executing an event instruction corresponding to the second Bluetooth device in the event information field based on the event information field.

According to one embodiment, executing an event instruction corresponding to the second Bluetooth device in the event information field comprises:
detecting whether an event identification in the event information field comprises an identification of the second Bluetooth device;
if the event identification in the event information field comprises an identification of the second Bluetooth device, executing the event instruction corresponding to the identification of the second Bluetooth device.

According to one embodiment, executing an event instruction corresponding to the second Bluetooth device in the event information field comprises: executing an event instruction to be executed by a default second Bluetooth device.

Since the Bluetooth beacon frame message comprises an event information field, this method can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

According to one embodiment, the Bluetooth beacon frame message further comprises a device identification field indicating a device name of the first Bluetooth device.

According to one embodiment, the Bluetooth beacon frame message further comprises a MAC address field for detecting whether a MAC address of the first Bluetooth device is a trusted MAC address based on the MAC address.

Optionally, the Bluetooth beacon frame message further comprises a frame control field; and the method further comprises:
determining whether the Bluetooth beacon frame message carries manufacturer-defined subtitle data based on a thirteenth bit of the frame control field; or
determining whether the Bluetooth beacon frame message is a binding acknowledgement message based on a fourteenth bit of the frame control field; or
determining whether the Bluetooth beacon frame message carries manufacturer-defined subtitle data based on a thirteenth bit of the frame control field, and determining whether the Bluetooth beacon frame message is a binding acknowledgement message based on a fourteenth bit of the frame control field.
According to one embodiment, the Bluetooth beacon frame message further comprises a frame counter field indicating a frame sequence of the Bluetooth beacon frame message;
and the method further comprises:
   detecting whether another Bluetooth beacon frame message having the frame sequence has been processed;
   if another Bluetooth beacon frame message having the frame sequence has been processed, not processing the Bluetooth beacon frame message.

Since the Bluetooth beacon frame message further comprises a frame counter field in this method, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

According to a third aspect of the embodiments of the present invention, there is provided a message transmission apparatus, comprising:
a message generation module configured to generate a Bluetooth beacon frame message based on an interaction purpose with a second Bluetooth device; and
a message transmission module configured to broadcast the Bluetooth beacon frame message;
wherein the Bluetooth beacon frame message contains a field indicating the interaction purpose.

According to one embodiment, the Bluetooth beacon frame message contains a service information field; and
the service information field comprises current operation data of a first Bluetooth device;
or the service information field comprises message composition information of the Bluetooth beacon frame message;
or the service information field comprises current operation data of the first Bluetooth device and message composition information of the Bluetooth beacon frame message.

Since the Bluetooth beacon frame message contains a service information field, this apparatus can allow the second Bluetooth device to acquire the current operation data of the first Bluetooth device and/or message composition information, even if a Bluetooth connection between the first and second Bluetooth devices is not established.

According to one embodiment, the service information field comprises at least one of:
a first bit indicating whether the first Bluetooth device has been bound with another Bluetooth device;
a second bit indicating whether the first Bluetooth device has established a Bluetooth connection with another Bluetooth device;
a third bit indicating whether the first Bluetooth device is a central device or a peripheral device;
a fourth bit indicating whether the Bluetooth beacon frame message has been encrypted;
a fifth bit indicating whether the Bluetooth beacon frame message carries a medium access control (MAC) address of the first Bluetooth device;
a sixth bit indicating whether the Bluetooth beacon frame message carries a capability field;
a seventh bit indicating whether the Bluetooth beacon frame message carries an event information field; and
an eighth bit indicating whether the Bluetooth beacon frame message carries manufacturer-defined data.

According to one embodiment, the Bluetooth beacon frame message comprises a capability field indicating capabilities of the first Bluetooth device.

According to one embodiment, the capability field comprises at least one of:
a ninth bit indicating whether the first Bluetooth device has a capability to establish a Bluetooth connection;
a tenth bit indicating whether the first Bluetooth device has a capability to serve as a central device;
an eleventh bit indicating whether the first Bluetooth device has an encryption capability; and
a twelfth bit indicating whether the first Bluetooth device has input and output capabilities.

Since the Bluetooth beacon frame message comprises a capability field, this apparatus can allow the second Bluetooth device to acquire the capabilities of the first Bluetooth device, even if a Bluetooth connection between the first and second Bluetooth devices is not established.

According to one embodiment, the Bluetooth beacon frame message comprises an event information field comprising an event instruction for controlling the second Bluetooth device.

According to one embodiment, the event information field comprises:
an event identification field indicating the second Bluetooth device; and
an event instruction indicating an event to be executed by the second Bluetooth device.
According to one embodiment, the event information field comprises:
   an event instruction indicating an event to be executed by a default second Bluetooth device.

Since the Bluetooth beacon frame message comprises an event information field, this apparatus can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

According to one embodiment, the Bluetooth beacon frame message further comprises a device identification field indicating a device name of the first Bluetooth device.

According to one embodiment, the Bluetooth beacon frame message further comprises a MAC address field indicating a MAC address of the first Bluetooth device.

According to one embodiment, the Bluetooth beacon frame message further comprises a frame control field comprising at least one of:
a thirteenth bit indicating whether the Bluetooth beacon frame message carries manufacturer-defined subtitle data; and
a fourteenth bit indicating whether the Bluetooth beacon frame message is a binding acknowledgement message.

According to one embodiment, the Bluetooth beacon frame message further comprises a frame counter field indicating a frame sequence of the Bluetooth beacon frame message.

Since the Bluetooth beacon frame message further comprises a frame counter field in this apparatus, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

According to a fourth aspect of the embodiments of the present invention, there is provided a message reception apparatus, comprising:
a message reception module configured to receive a Bluetooth beacon frame message broadcast by a first Bluetooth device, the Bluetooth beacon frame message containing a field indicating an interaction purpose; and
a message processing module configured to process the field in the Bluetooth beacon frame message.

According to one embodiment, the Bluetooth beacon frame message comprises a service information field; and the apparatus further comprises:
an information acquisition module configured to acquire current operation data of the first Bluetooth device based on the service information field,
or acquire message composition information of the Bluetooth beacon frame message based on the service information field,
or acquire current operation data of the first Bluetooth device based on the service information field, and acquire message composition information of the Bluetooth beacon frame message based on the service information field.

Since the Bluetooth beacon frame message contains a service information field, this apparatus can allow the second Bluetooth device to acquire the current operation data of the first Bluetooth device and/or message composition information, even if a Bluetooth connection between the first and second Bluetooth devices is not established.

According to one embodiment, the information acquisition module comprises at least one of:
a binding determination sub-module configured to acquire whether the first Bluetooth device has been bound with another Bluetooth device based on a first bit of the service information field;
a connection determination sub-module configured to acquire whether the first Bluetooth device has established a Bluetooth connection with another Bluetooth device based on a second bit of the service information field; and
a central/peripheral determination sub-module configured to acquire whether the first Bluetooth device is a central device or a peripheral device based on a third bit of the service information field.

According to one embodiment, the information acquisition module comprises at least one of:
an encryption determination sub-module configured to acquire whether the Bluetooth beacon frame message has been encrypted based on a fourth bit of the service information field;
an address determination sub-module configured to acquire whether the Bluetooth beacon frame message carries a MAC address of the first Bluetooth device based on a fifth bit of the service information field;
a first information sub-module configured to acquire whether the Bluetooth beacon frame message carries a capability field based on a sixth bit of the service information field;
a second information sub-module configured to acquire whether the Bluetooth beacon frame message carries an event information field based on a seventh bit of the service information field; and
a third information sub-module configured to acquire whether the Bluetooth beacon frame message carries manufacturer-defined data based on an eighth bit of the service information field.

According to one embodiment, the Bluetooth beacon frame message comprises a capability field; and said apparatus further comprises a capability acquisition module configured to acquire the capabilities of the first Bluetooth device based on the capability field.

According to one embodiment, the capability acquisition module comprises at least one of:
a first capability sub-module configured to acquire whether the first Bluetooth device has a capability to establish a Bluetooth connection based on a ninth bit of the capability field;
a second capability sub-module configured to acquire whether the first Bluetooth device has a capability to serve as a central device based on a tenth bit of the capability field;
a third capability sub-module configured to acquire whether the first Bluetooth device has an encryption capability based on an eleventh bit of the capability field;
a fourth capability sub-module configured to acquire whether the first Bluetooth device has input and output capabilities based on a twelfth bit of the capability field.

Since the Bluetooth beacon frame message comprises a capability field, this apparatus can allow the second Bluetooth device to acquire the capabilities of the first Bluetooth device, even if a Bluetooth connection between the first and second Bluetooth devices is not established.

According to one embodiment, the Bluetooth beacon frame message comprises the event information field, and said apparatus further comprises an instruction execution module configured to execute an event instruction corresponding to the second Bluetooth device in the event information field.

According to one embodiment, the instruction execution module comprises:
a first identification sub-module configured to detect whether an event identification in the event information field comprises an identification of the second Bluetooth device;
a first execution sub-module configured to, if the event identification in the event information field comprises an identification of the second Bluetooth device, execute the event instruction corresponding to the identification of the second Bluetooth device.

According to one embodiment, the instruction execution module further comprises: a second execution sub-module configured to execute an event instruction to be executed by a default second Bluetooth device.

Since the Bluetooth beacon frame message comprises an event information field, this apparatus can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

According to one embodiment, the Bluetooth beacon frame message further comprises a device identification field indicating a device name of the first Bluetooth device.

According to one embodiment, the Bluetooth beacon frame message further comprises a MAC address field; and the apparatus further comprises a first detection module configured to detect whether a MAC address of the first Bluetooth device is a trusted MAC address based on the MAC address field.

According to one embodiment, the Bluetooth beacon frame message further comprises a frame control field; and the apparatus further comprises:
a data carrying module configured to determine whether the Bluetooth beacon frame message carries manufacturer-defined subtitle data based on a thirteenth bit of the frame control field;
a binding determination module configured to determine whether the Bluetooth beacon frame message is a binding acknowledgement message based on a fourteenth bit of the frame control field;
a determination module configured to determine whether the Bluetooth beacon frame message carries manufacturer-defined subtitle data based on a thirteenth bit of the frame control field, and determine whether the Bluetooth beacon frame message is a binding acknowledgement message based on a fourteenth bit of the frame control field.

According to one embodiment, the Bluetooth beacon frame message further comprises a frame counter field indicating a frame sequence of the Bluetooth beacon frame message; and the apparatus further comprises:
a second detection module configured to detect whether another Bluetooth beacon frame message having the frame sequence has been processed;
a processing module configured to, if another Bluetooth beacon frame message having the frame sequence has been processed, not process the Bluetooth beacon frame message.

Since the Bluetooth beacon frame message further comprises a frame counter field in this apparatus, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

According to a fifth aspect of the embodiments of the present invention, there is provided a message transmission apparatus, comprising:
a processor; and
a memory configured to store an instruction executable by the processor,
wherein the processor is configured to:
   control a first Bluetooth device to generate a Bluetooth beacon frame message based on an interaction purpose with a second Bluetooth device; and
   broadcast the Bluetooth beacon frame message;
   wherein the Bluetooth beacon frame message contains a field indicating the interaction purpose.

According to a sixth aspect of the embodiments of the present invention, there is provided a message reception apparatus, comprising:
a processor; and
a memory configured to store an instruction executable by the processor,
wherein the processor is configured to:
   receive a Bluetooth beacon frame message broadcast by a first Bluetooth device, the Bluetooth beacon frame message containing a field indicating an interaction purpose; and
   process the field in the Bluetooth beacon frame message.

In one embodiment, the steps of the message transmission method are determined by computer program instructions.

Consequently, according to a seventh aspect, the invention is also directed to a computer program for executing the steps of a message transmission method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention have the following advantageous effects:
By generating and broadcasting a Bluetooth beacon frame message by a first Bluetooth device, the Bluetooth beacon frame message containing a field indicating an interaction purpose, and receiving and processing the Bluetooth beacon frame message by the second Bluetooth device, this invention solves the problem that interaction can only be performed when a first Bluetooth device has established connection with a second Bluetooth device, and information interaction can be performed using a field indicating an interaction purpose and contained in a Bluetooth beacon frame message without establishing a Bluetooth connection between the first and second Bluetooth devices.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a schematic drawing of an application environment of an embodiment of this invention.
FIG. 2 is a flow chart showing a message transmission method according to an exemplary embodiment of this invention.
FIG. 3 is a flow chart showing a message reception method according to an exemplary embodiment of this invention.
FIG. 4 is a flow chart showing a message reception method according to another exemplary embodiment of this invention.
FIG. 5 is a flow chart showing a message reception method according to yet another exemplary embodiment of this invention.
FIG. 6 is a flow chart showing a message reception method according to yet another exemplary embodiment of this invention.
FIG. 7 is a flow chart showing a message reception method according to yet another exemplary embodiment of this invention.
FIG. 8 is a flow chart showing a message reception method according to yet another exemplary embodiment of this invention.
FIG. 9 is a flow chart showing a message reception method according to yet another exemplary embodiment of this invention.
FIG. 10A consisting of FIG. 10A', FIG 10A", and FIG 10A"' is a schematic drawing of a format of a Bluetooth beacon frame message according to an exemplary embodiment of this invention.
FIG. 10B consisting of FIG. 10B', FIG 10B", and FIG 10B'" is a schematic drawing of a format of another Bluetooth beacon frame message according to an exemplary embodiment of this invention.
FIG. 11 is a flow chart showing a message transceiving method according to an exemplary embodiment of this invention.
FIG. 12A is a schematic drawing showing an implementation manner of a message transceiving method according to an exemplary embodiment of this invention.
FIG. 12B is a schematic drawing showing an implementation manner of a message transceiving method according to another exemplary embodiment of this invention.
FIG. 13 is a block diagram showing the structure of a message transmission apparatus according to an exemplary embodiment of this invention.
FIG. 14 is a block diagram showing the structure of a message reception apparatus according to an exemplary embodiment of this invention.
FIG. 15 is a block diagram showing the structure of a message reception apparatus according to another exemplary embodiment of this invention.
FIG. 16 is a block diagram showing the structure of a message transceiving apparatus according to an exemplary embodiment of this invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

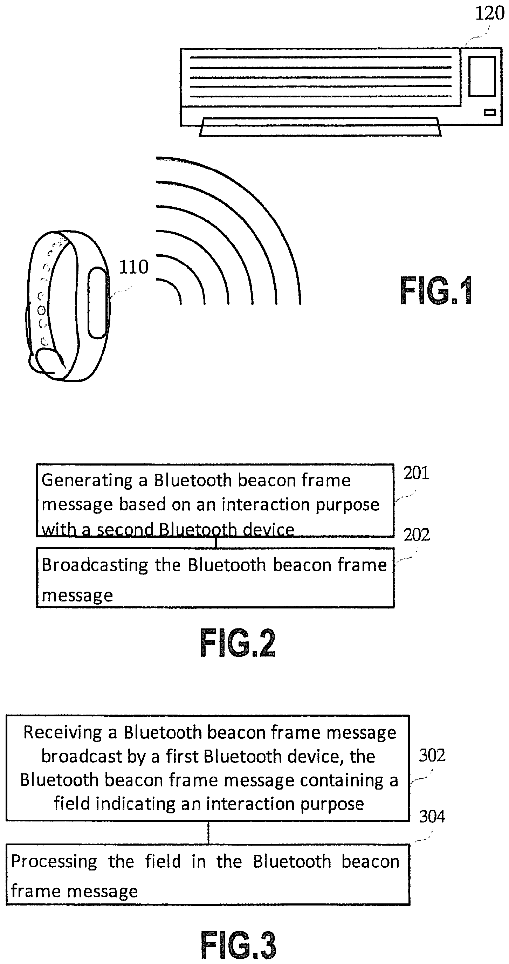

FIG. 1 is a schematic drawing of an application environment of an embodiment of this invention. The application environment comprises a first Bluetooth device 110 and a second Bluetooth device 120.

Both the first and second Bluetooth devices 110, 120 are provided with Bluetooth modules inside. The Bluetooth module supports a standard Bluetooth low energy (BLE) protocol, and comprises a control chip and a Bluetooth chip connected to the control chip. Optionally, the Bluetooth chip is a low-power Bluetooth system single crystal chip.

Both the first and second Bluetooth devices 110, 120 may have a Bluetooth data transmission function and a Bluetooth data reception function, or may only have one of the two functions. When the first Bluetooth device 110 has a Bluetooth data transmission function, the second Bluetooth device 120 has a Bluetooth data reception function; and vice versa.

For example, the first Bluetooth device 110 may be a device supporting a Bluetooth data transmission function, such as a cell phone, a notebook computer or a smart bracelet. The second Bluetooth device 120 may be a device supporting a Bluetooth data reception function, such as an air conditioner or a loudspeaker box. Optionally, there may be one or more first Bluetooth device(s) 110, and one or more second Bluetooth device(s) 120.

FIG. 2 is a flow chart showing a message transmission method according to an exemplary embodiment of this invention. This embodiment is illustrated when the message transmission method is applied to a first Bluetooth device having a Bluetooth data transmission function. As shown in FIG. 2, the message transmission method comprises the following steps.

In step 201, a Bluetooth beacon frame message is generated based on an interaction purpose with a second Bluetooth device.

The first Bluetooth device generates a Bluetooth beacon frame message based on an interaction purpose with a second Bluetooth device, wherein the Bluetooth beacon frame message contains a field indicating the interaction purpose.

In step 202, the Bluetooth beacon frame message is broadcast.

The first Bluetooth device broadcasts the Bluetooth beacon frame message.

Optionally, the first Bluetooth device broadcasts the Bluetooth beacon frame message at a predetermined interval.

To sum up, by generating and broadcasting a Bluetooth beacon frame message by a first Bluetooth device, the Bluetooth beacon frame message containing a field indicating an interaction purpose, and receiving and processing the Bluetooth beacon frame message by the second Bluetooth device, the message transmission method of the embodiment of this invention solves the problem that interaction can be performed only when a first Bluetooth device has established connection with a second Bluetooth device, and information interaction can be performed using a field indicating an interaction purpose and contained in a Bluetooth beacon frame message without establishing a Bluetooth connection between the first and second Bluetooth devices.

In one embodiment based on FIG. 2, the Bluetooth beacon frame message contains a service information field; and
the service information field comprises at least one of current operation data of the first Bluetooth device and message composition information of the Bluetooth beacon frame message.

The service information field comprises at least one of:
a first bit indicating whether the first Bluetooth device has been bound with another Bluetooth device;
a second bit indicating whether the first Bluetooth device has established a Bluetooth connection with another Bluetooth device;
a third bit indicating whether the first Bluetooth device is a central device or a peripheral device;
a fourth bit indicating whether the Bluetooth beacon frame message has been encrypted;
a fifth bit indicating whether the Bluetooth beacon frame message carries a medium access control MAC address of the first Bluetooth device;
a sixth bit indicating whether the Bluetooth beacon frame message carries a capability field;
a seventh bit indicating whether the Bluetooth beacon frame message carries an event information field; and
an eighth bit indicating whether the Bluetooth beacon frame message carries manufacturer-defined data.

To sum up, since the Bluetooth beacon frame message contains a service information field, this embodiment can allow the second Bluetooth device to acquire the current operation status of the first Bluetooth device and/or the composition of the message information , even if a Bluetooth connection between the first and second Bluetooth devices is not established.

In an optional embodiment based on FIG. 2, the Bluetooth beacon frame message comprises a capability field indicating capabilities of the first Bluetooth device.

The capability field comprises at least one of:
a ninth bit indicating whether the first Bluetooth device has a capability to establish a Bluetooth connection;
a tenth bit indicating whether the first Bluetooth device has a capability to serve as a central device;
an eleventh bit indicating whether the first Bluetooth device has an encryption capability; and
a twelfth bit indicating whether the first Bluetooth device has input and output capabilities.

To sum up, since the Bluetooth beacon frame message comprises a capability field, this embodiment can allow the second Bluetooth device to acquire the capabilities of the first Bluetooth device, even if a Bluetooth connection between the first and second Bluetooth devices is not established.

In an optional embodiment based on FIG. 2, the Bluetooth beacon frame message comprises an event information field comprising an event instruction for controlling the second Bluetooth device.

The event information field comprises:
an event identification field indicating the second Bluetooth device; and
an event instruction indicating an event to be executed by the second Bluetooth device.

Optionally, the event information field further comprises:
an event instruction indicating an event to be executed by a default second Bluetooth device.

To sum up, since the Bluetooth beacon frame message comprises an event information field, this embodiment can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

In an optional embodiment based on FIG. 2, the Bluetooth beacon frame message further comprises a device identification field indicating a device name of the first Bluetooth device.

In an optional embodiment based on FIG. 2, the Bluetooth beacon frame message further comprises a MAC address field indicating a MAC address of the first Bluetooth device.

In an optional embodiment based on FIG. 2, the Bluetooth beacon frame message further comprises a frame control field comprising at least one of:
a thirteenth bit indicating whether the Bluetooth beacon frame message carries manufacturer-defined subtitle data; and
a fourteenth bit indicating whether the Bluetooth beacon frame message is a binding acknowledgement message.

In an optional embodiment based on FIG. 2, the Bluetooth beacon frame message further comprises a frame counter field indicating a frame sequence of the Bluetooth beacon frame message.

To sum up, since the Bluetooth beacon frame message further comprises a frame counter field in this embodiment, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

FIG. 3 is a flow chart showing a message reception method according to an exemplary embodiment of this invention. This embodiment is illustrated when the message reception method is applied to a second Bluetooth device having a Bluetooth data reception function. As shown in FIG. 3, the message reception method comprises:
Step 302: receiving a Bluetooth beacon frame message broadcast by a first Bluetooth device, the Bluetooth beacon frame message containing a field indicating an interaction purpose.

The second Bluetooth device receives the Bluetooth beacon frame message broadcast by the first Bluetooth device, the Bluetooth beacon frame message containing a field indicating an interaction purpose.

Step 304: processing the field in the Bluetooth beacon frame message.

After receiving the Bluetooth beacon frame message broadcast by the first Bluetooth device, the second Bluetooth device processes the field in the Bluetooth beacon frame message.

To sum up, by generating and broadcasting a Bluetooth beacon frame message by a first Bluetooth device, the Bluetooth beacon frame message containing a field indicating an interaction purpose, and receiving and processing the Bluetooth beacon frame message by the second Bluetooth device, the message reception method of this invention solves the problem that interaction can be performed only when a first Bluetooth device has established connection with a second Bluetooth device, and information interaction can be performed using a field indicating an interaction purpose and contained in a Bluetooth beacon frame message without establishing a Bluetooth connection between the first and second Bluetooth devices.

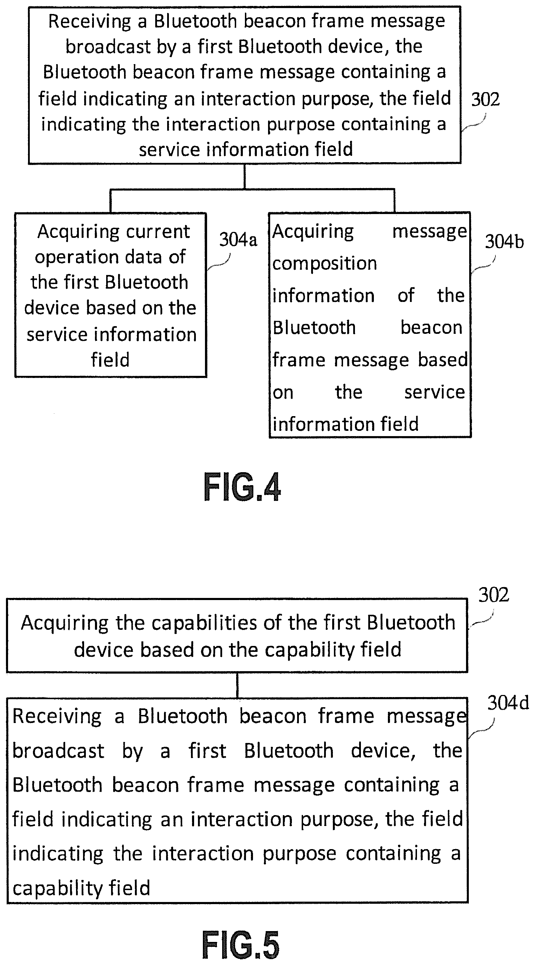

In an optional embodiment based on FIG. 3, when the field indicating the interaction purpose contains the service information field, Step 304 may be substituted by Step 304a or Step 304b or a combination thereof, as shown in FIG. 4:
Step 304a: acquiring current operation data of the first Bluetooth device based on the service information field.

Optionally, Step 304a further comprises at least one of:
1. acquiring whether the first Bluetooth device has been bound with another Bluetooth device based on a first bit of the service information field;
2. acquiring whether the first Bluetooth device has established a Bluetooth connection with another Bluetooth device based on a second bit of the service information field; and
3. acquiring whether the first Bluetooth device is a central device or a peripheral device based on a third bit of the service information field.

Step 304b: acquiring message composition information of the Bluetooth beacon frame message based on the service information field.

Optionally, Step 304b further comprises at least one of:
1. acquiring whether the Bluetooth beacon frame message has been encrypted based on a fourth bit of the service information field;
2. acquiring whether the Bluetooth beacon frame message carries a MAC address of the first Bluetooth device based on a fifth bit of the service information field;
3. acquiring whether the Bluetooth beacon frame message carries a capability field based on a sixth bit of the service information field;
4. acquiring whether the Bluetooth beacon frame message carries an event information field based on a seventh bit of the service information field; and
5. acquiring whether the Bluetooth beacon frame message carries manufacturer-defined data based on an eighth bit of the service information field.

The above numbers "1, 2, 3, ..." are intended to distinguish the steps only, and do not define the sequence of the steps which may be arranged randomly by those skilled in the art.

To sum up, since the Bluetooth beacon frame message contains a service information field, this embodiment can allow the second Bluetooth device to acquire the current operation status of the first Bluetooth device and/or the composition of the message information, even if a Bluetooth connection between the first and second Bluetooth devices is not established.

In an optional embodiment based on FIG. 3, when the field indicating the interaction purpose contains the capability field, Step 304 may be substituted by Step 304d, as shown in FIG. 5:
Step 304d: acquiring the capabilities of the first Bluetooth device based on the capability field.

Optionally, Step 304d further comprises at least one of:
1. acquiring whether the first Bluetooth device has a capability to establish a Bluetooth connection based on a ninth bit of the capability field;
2. acquiring whether the first Bluetooth device has a capability to serve as a central device based on a tenth bit of the capability field;
3. acquiring whether the first Bluetooth device has an encryption capability based on an eleventh bit of the capability field;
4. acquiring whether the first Bluetooth device has input and output capabilities based on a twelfth bit of the capability field.

The above numbers "1, 2, 3, ..." are intended to distinguish the steps only, and do not define the sequence of the steps which may be arranged randomly by those skilled in the art.

To sum up, since the Bluetooth beacon frame message comprises a capability field, this embodiment can allow the second Bluetooth device to acquire the capabilities of the first Bluetooth device, even if a Bluetooth connection between the first and second Bluetooth devices is not established.

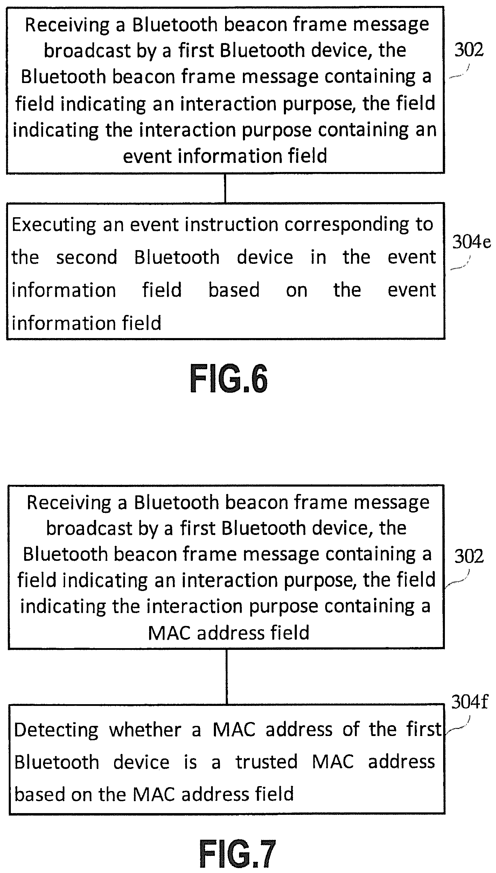

In an optional embodiment based on FIG. 3, when the field indicating the interaction purpose contains an event information field, Step 304 may be substituted by Step 304e, as shown in FIG. 6:
Step 304e: executing an event instruction corresponding to the second Bluetooth device in the event information field based on the event information field.

Optionally, Step 304e further comprises:
1. detecting whether an event identification in the event information field comprises an identification of the second Bluetooth device;
2. if the event identification in the event information field comprises an identification of the second Bluetooth device, executing the event instruction corresponding to identification of the second Bluetooth device.

Optionally, Step 304e further comprises:
executing an event instruction to be executed by a default second Bluetooth device.

To sum up, since the Bluetooth beacon frame message comprises an event information field, this embodiment can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

In an optional embodiment based on FIG. 3, the Bluetooth beacon frame message further comprises a device identification field indicating a device name of the first Bluetooth device.

In an optional embodiment based on FIG. 3, when the field indicating the interaction purpose contains a MAC address field, Step 304 may be substituted by Step 304f, as shown in FIG. 7:
Step 304f: detecting whether a MAC address of the first Bluetooth device is a trusted MAC address based on the MAC address field.

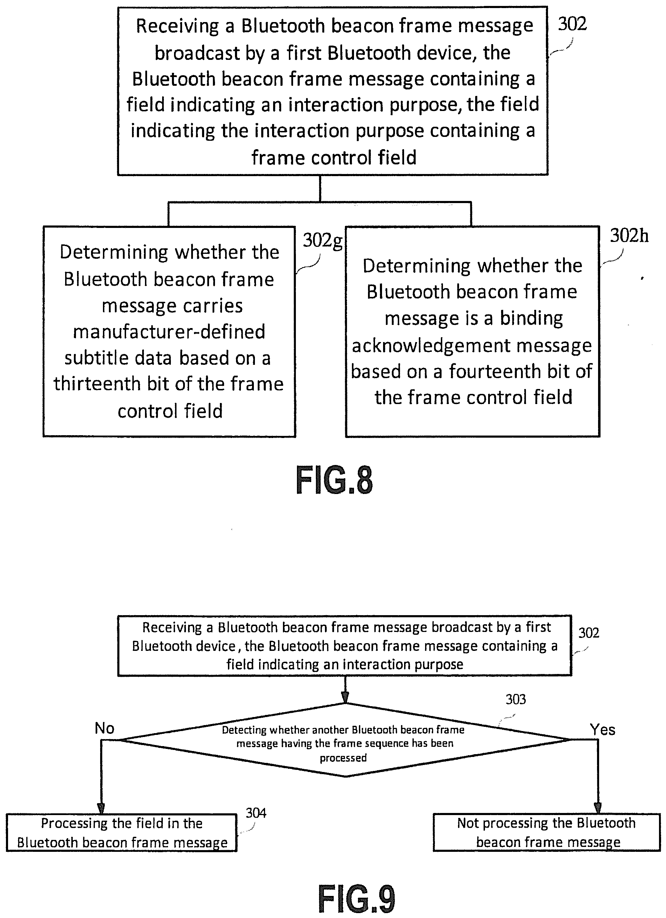

In an optional embodiment based on FIG. 3, when the field indicating the interaction purpose contains a frame control field, Step 304 may be substituted by Step 304g or Step 304h or a combination thereof, as shown in FIG. 8:
Step 304g: determining whether the Bluetooth beacon frame message carries manufacturer-defined subtitle data based on a thirteenth bit of the frame control field;
Step 304h: determining whether the Bluetooth beacon frame message is a binding acknowledgement message based on a fourteenth bit of the frame control field.

In an optional embodiment based on FIG. 3, when the field indicating the interaction purpose contains a frame counter field, the method further comprises Step 303 before Step 304, as shown in FIG. 9:
Step 303: detecting whether another Bluetooth beacon frame message having the frame sequence has been processed.

If another Bluetooth beacon frame message having the frame sequence has been processed, the Bluetooth beacon frame message is not processed, otherwise turn to Step 304.

To sum up, since the Bluetooth beacon frame message further comprises a frame counter field in this embodiment, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

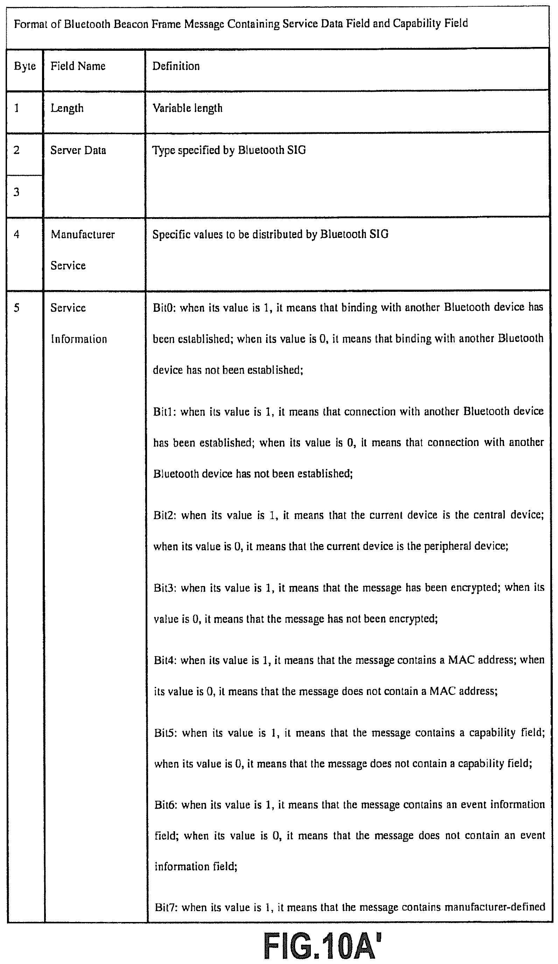

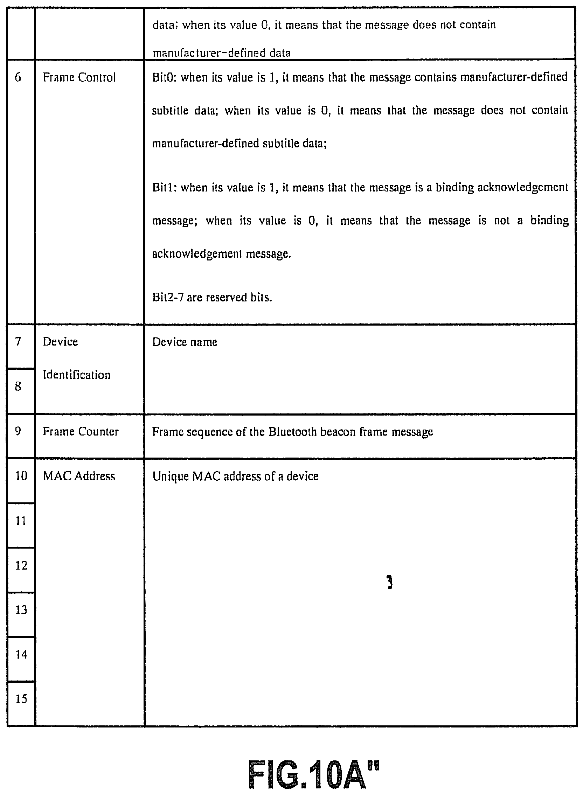

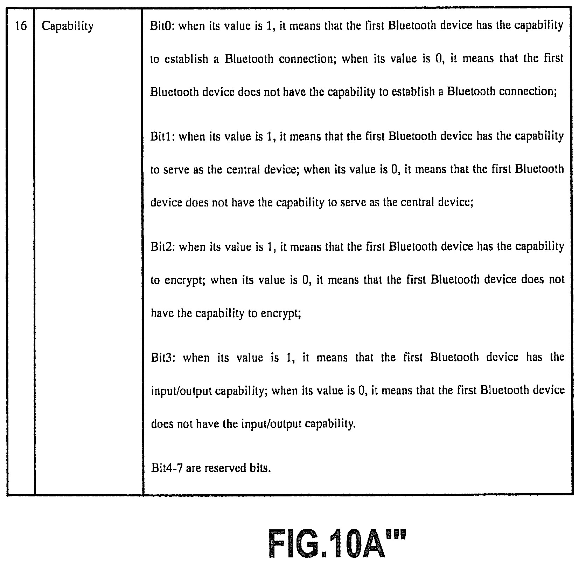

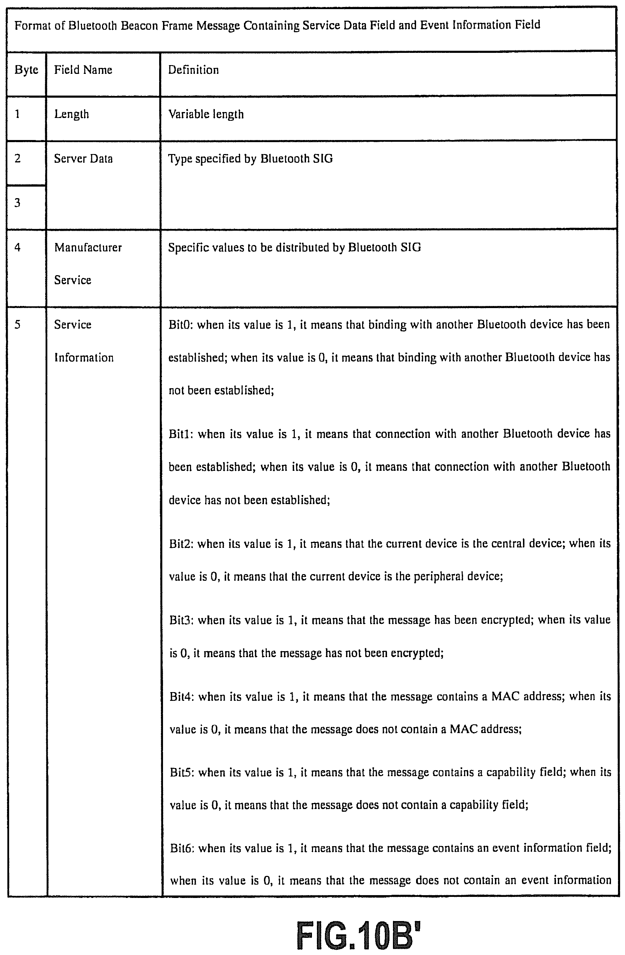

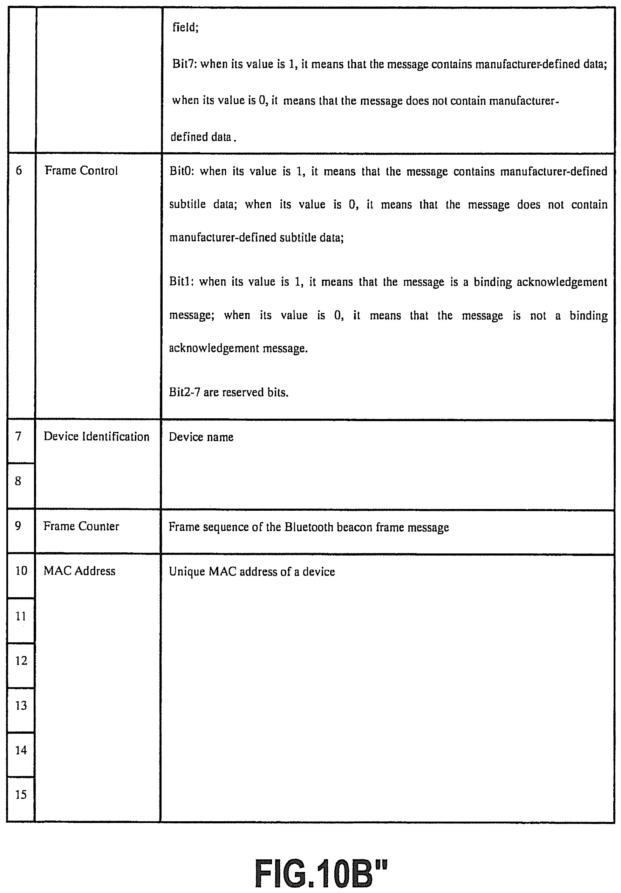

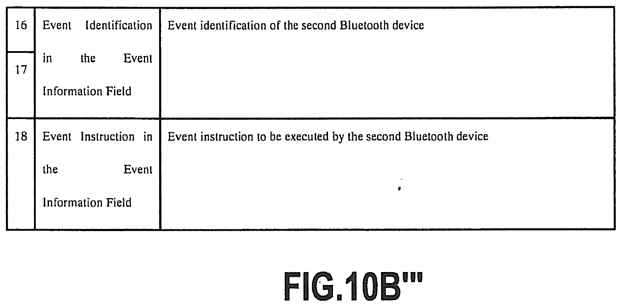

As schematic examples, FIGs. 10A and 10B respectively show a schematic format of the Bluetooth beacon frame message.

As shown in FIGs. 10A-10B, the Bluetooth beacon frame message includes at least one of a length field, a service data field, a manufacturer service field, a service information field, a frame control field, a device identification field, a frame counter field, a MAC address field, a capability field and an event information field.

In FIGs. 10A-10B, the meaning of Bluetooth SIG (Special Interest Group) is the Bluetooth Technology Alliance, and the MAC address means a medium access control address used to define a position of a network device.

FIG. 10A schematically shows a format of the Bluetooth beacon frame message including a length field, a service data field, a manufacturer service field, a service information field, a device identification field, a frame counter field, a MAC address field, and a capability field. The meaning of each byte of the Bluetooth beacon frame message is as below:
The first byte is the length field for indicating a message length of the Bluetooth beacon frame message, which may vary.

The second and third bytes are the server data field of a type specified by the Bluetooth SIG.

The fourth byte is the manufacturer service (MI Service) field, whose specific values are distributed by the Bluetooth SIG.

The fifth byte is the service information field, and the meaning of each bit of the field is as below:
The first bit (bit0): when its value is 1, it means that binding with another Bluetooth device has been established; when its value is 0, it means that binding with another Bluetooth device has not been established;
The second bit (bit1): when its value is 1, it means that connection with another Bluetooth device has been established; when its value is 0, it means that connection with another Bluetooth device has not been established;
The third bit (bit2): when its value is 1, it means that the current device is the central device; when its value is 0, it means that the current device is the peripheral device;
The fourth bit (bit3): when its value is 1, it means that the message has been encrypted; when its value is 0, it means that the message has not been encrypted;
The fifth bit (bit4): when its value is 1, it means that the message contains a MAC address; when its value is 0, it means that the message does not contain a MAC address;
The sixth bit (bit5): when its value is 1, it means that the message contains a capability field; when its value is 0, it means that the message does not contain a capability field;
The seventh bit (bit6): when its value is 1, it means that the message contains an event information field; when its value is 0, it means that the message does not contain an event information field;
The eighth bit (bit7): when its value is 1, it means that the message contains manufacturer-defined data; when its value is 0, it means that the message does not contain manufacturer-defined data;
The sixth byte is the frame control field, and the meaning of each bit of the field is as below:
   The first bit (bit0): when its value is 1, it means that the message contains manufacturer-defined subtitle data; when its value is 0, it means that the message does not contain manufacturer-defined subtitle data;
   The second bit (bit1): when its value is 1, it means that the message is a binding acknowledgement message; when its value is 0, it means that the message is not a binding acknowledgement message.

Other bits in the frame control field are reserved bits.

The seventh and eighth bytes are the device identification (Product ID) field indicating a name of a device.

The ninth field is the frame counter field indicating a frame sequence of the Bluetooth beacon frame message.

The tenth to fifteenth bytes are the MAC address field indicating the MAC address of a first Bluetooth device.

The sixteenth byte is the capability field, and the meaning of each bit of the field is as below:
The ninth bit (bit0): when its value is 1, it means that the first Bluetooth device has the capability to establish a Bluetooth connection; when its value is 0, it means that the first Bluetooth device does not have the capability to establish a Bluetooth connection;
The tenth bit (bit1): when its value is 1, it means that the first Bluetooth device has the capability to serve as the central device; when its value is 0, it means that the first Bluetooth device does not have the capability to serve as the central device;
The eleventh bit (bit2): when its value is 1, it means that the first Bluetooth device has the capability to encrypt; when its value is 0, it means that the first Bluetooth device does not have the capability to encrypt;
The twelfth bit (bit3): when its value is 1, it means that the first Bluetooth device has the input/output capability; when its value is 0, it means that the first Bluetooth device does not have the input/output capability.

Other bits in the capability field are reserved bits.

FIG. 10B schematically shows a format of the Bluetooth beacon frame message including a length field, a service data field, a manufacturer service field, a service information field, a device identification field, a frame counter field, a MAC address field, and an event information field. The meaning of each byte of the Bluetooth beacon frame message is as below:
The meanings of the first to fifteenth bytes are the same as those of the first to fifteenth bytes in FIG. 10A, and will not be elaborated herein.

The sixteenth and seventeenth bytes are the event identification (Event ID) field of the event information field for indicating the identification of the second Bluetooth device, i.e., indicating the identification of the second Bluetooth device that needs to perform an event instruction.

The eighteenth byte is the event instruction (Event Data) field in the event information field for indicating an event instruction to be performed by the second Bluetooth device.

If the event information field does not contain an event identification field, the event instruction field indicates an event instruction to be performed by a default second Bluetooth device. The default second Bluetooth device may be any second Bluetooth device.

Optionally, each field contained in the Bluetooth beacon frame message may be an application environment, which may be combined randomly by those skilled in the art. FIGS. 10A-10B are only exemplary illustrations.

The above numbers "first, second, third ..." are intended to distinguish the bits and bytes only, and do not define the sequence of the bits and bytes which may be arranged randomly by those skilled in the art.

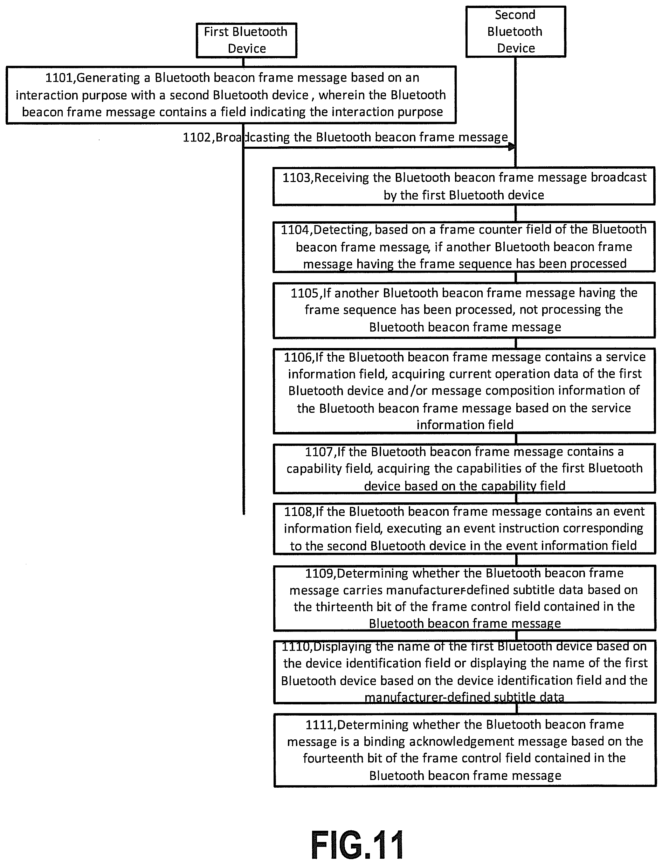

FIG. 11 is a flow chart showing a message transceiving method according to an exemplary embodiment of this invention. The embodiment is illustrated when the message transceiving method is applied to the application environment shown in FIG. 1. As shown in FIG. 11, the message transceiving method may comprise the following steps:
In step 1101, generating, by a first Bluetooth device, a Bluetooth beacon frame message based on an interaction purpose with a second Bluetooth device, wherein the Bluetooth beacon frame message contains a field indicating the interaction purpose.

Optionally, the first Bluetooth device generates the Bluetooth beacon frame message based on a preset mode.

Optionally, the first Bluetooth device generates the Bluetooth beacon frame message based on a control command of a bound mobile terminal.

For example, the first Bluetooth device is a smart bracelet that generates the Bluetooth beacon frame message based on a control command of a bound smart cell phone.

Optionally, the Bluetooth beacon frame message contains a length field, a service data field, a frame control field, a device identification field, a frame counter field, and a MAC address field.

In step 1102, broadcasting the Bluetooth beacon frame message by the first Bluetooth device.

The first Bluetooth device broadcasts the Bluetooth beacon frame message to its surroundings.

Optionally, the first Bluetooth device broadcasts the Bluetooth beacon frame message to its surroundings at a predetermined interval.

In step 1103, receiving, by the second Bluetooth device, the Bluetooth beacon frame message broadcast by the first Bluetooth device.

The second Bluetooth device receives the Bluetooth beacon frame message, and reads the content therein.

In Step 1104, detecting, by the second Bluetooth device and based on a frame counter field of the Bluetooth beacon frame message, if another Bluetooth beacon frame message having the frame sequence has been processed.

Since the same Bluetooth beacon frame message may be broadcast for many times, if the Bluetooth beacon frame message contains a frame counter field, the second Bluetooth device retrieves the frame sequence of the Bluetooth beacon frame message based on the frame counter field of the Bluetooth beacon frame message, and detects if another Bluetooth beacon frame message having the frame sequence has been processed.

If another Bluetooth beacon frame message having the frame sequence has been processed, turn to step 1105.

If another Bluetooth beacon frame message having the frame sequence has not been processed, turn to at least one of steps 1106-1111.

In step 1105, if another Bluetooth beacon frame message having the frame sequence has been processed, not processing the Bluetooth beacon frame message by the second Bluetooth device.

In step 1106, if the Bluetooth beacon frame message contains a service information field, acquiring, by the second Bluetooth device, current operation data of the first Bluetooth device or message composition information of the Bluetooth beacon frame message or current operation data of the first Bluetooth device and message composition information of the Bluetooth beacon frame message based on the service information field.

In step 1107, if the Bluetooth beacon frame message contains a capability field, acquiring, by the second Bluetooth device, the capabilities of the first Bluetooth device based on the capability field.

In step 1108, if the Bluetooth beacon frame message contains an event information field, executing, by the second Bluetooth device, an event instruction corresponding to the second Bluetooth device in the event information field.

This step also comprises the steps of:
A. detecting if the event identification in the event information field contains an identification of the second Bluetooth device.
   After receiving the Bluetooth beacon frame message, the second Bluetooth device detects if the event identification in the event information field contains an identification of the second Bluetooth device.
B. if an identification of the second Bluetooth device is contained, executing an event instruction corresponding to the identification of the second Bluetooth device.

If the detection result shows that the event identification in the event information field contains an identification of the second Bluetooth device, an event instruction corresponding to the identification of the second Bluetooth device is executed.

Step 1109: determining, by the second Bluetooth device, whether the Bluetooth beacon frame message carries manufacturer-defined subtitle data based on the thirteenth bit of the frame control field contained in the Bluetooth beacon frame message.

Step 1110: displaying, by the second Bluetooth device, the name of the first Bluetooth device based on the device identification field or displaying, by the second Bluetooth device, the name of the first Bluetooth device based on the device identification field and the manufacturer-defined subtitle data.

For example, if the device identification field of the first Bluetooth device is "xx portable source", the second Bluetooth device displays the name of the first Bluetooth device "xx portable source".

For example, if the device identification field of the first Bluetooth device is "portable source", and the manufacturer-defined subtitle data is "xx", the second Bluetooth device displays the name of the first Bluetooth device "portable source (xx)".

In step 1111, determining, by the second Bluetooth device, whether the Bluetooth beacon frame message is a binding acknowledgement message based on the fourteenth bit of the frame control field contained in the Bluetooth beacon frame message.

When a Bluetooth connection has been established between the first and second Bluetooth devices, the Bluetooth beacon frame message can be used as the binding acknowledgement message. In this case, the second Bluetooth device determines whether the Bluetooth beacon frame message is a binding acknowledgement message based on the fourteenth bit of the frame control field contained in the Bluetooth beacon frame message.

To sum up, by generating and broadcasting a Bluetooth beacon frame message by a first Bluetooth device, the Bluetooth beacon frame message containing a field indicating an interaction purpose, receiving and processing the Bluetooth beacon frame message by the second Bluetooth device, the message transceiving method of the embodiment solves the problem that interaction can be performed only when a first Bluetooth device has established connection with a second Bluetooth device, and information interaction can be performed using a field indicating an interaction purpose and contained in a Bluetooth beacon frame message without establishing a Bluetooth connection between the first and second Bluetooth devices.

Since the Bluetooth beacon frame message comprises a service information field and a capability field, the message transceiving method of the embodiment can allow the second Bluetooth device to acquire the current operation state and the capabilities of the first Bluetooth device, even if a Bluetooth connection between the first and second Bluetooth devices is not established.

Since the Bluetooth beacon frame message comprises an event information field, the message transceiving method of the embodiment can allow the first Bluetooth device to wirelessly control the second Bluetooth device, even if a Bluetooth connection between the first and second Bluetooth devices is not established. Different from the related arts where the first Bluetooth device can only control one second Bluetooth device after a Bluetooth connection between the first and second Bluetooth devices is established, the first Bluetooth device of this embodiment can simultaneously and wirelessly control multiple second Bluetooth devices.

Since the Bluetooth beacon frame message further comprises a frame counter field, the transmitted Bluetooth beacon frame message can be marked with a frame sequence of the frame counter field, and it can be detected if another Bluetooth beacon frame message having the frame sequence has been processed. Therefore, the message transceiving method of the embodiment can avoid repeated processing of messages and reduce waste of device resources.

In a schematic example, the first Bluetooth device is a mobile power source. The Bluetooth beacon frame message generated by the mobile power source contains a service information field and a capability field.

The value of the service information field may be 10000100. That is, the information carried by the 8 bits in the service information field is sequentially that: the mobile power source has not been bound with another device; the mobile power source has not established a Bluetooth connection with another device; the mobile power source is currently a peripheral device; the Bluetooth beacon frame message is not encrypted; the Bluetooth beacon frame message does not contain a MAC address field; the Bluetooth beacon frame message contains a capability field; the Bluetooth beacon frame message does not contain an event information field; the Bluetooth beacon frame message does not contain manufacturer-defined data.

The value of the capability information field may be 00000000. That is, the information carried by the 4 bits (the last 4 bits are reserved bits) in the capability information field is sequentially that: the mobile power source does not have a capability to establish a connection; the mobile power source does not have a capability to serve as a central device; the mobile power source does not have a capability to encrypt; and the mobile power source does not have a capability to output/input.

Optionally, the Bluetooth beacon frame message generated by the mobile power source also contains a length field, a service data field, a device identification field and a frame counter field. The device identification field is "x MI mobile power source".

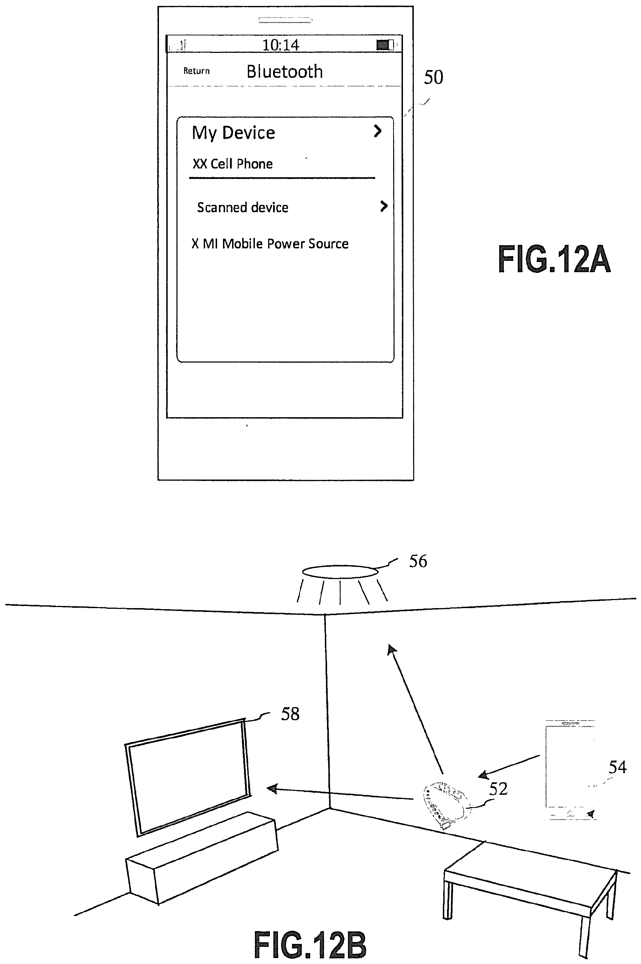

After the first Bluetooth device broadcasts the Bluetooth beacon frame message, if the second Bluetooth device receives the Bluetooth beacon frame message, the second Bluetooth device can acquire the operation state and capabilities of the first Bluetooth device through the service information field and the capability field, and display "x MI Mobile Power Source" on a user interaction interface as shown in FIG. 12A.

In another schematic example as shown in FIG. 12B, the first Bluetooth device is a smart bracelet 52 and is bound to a smart cell phone 54, then the smart cell phone 54 can acquire the MAC address of the smart bracelet 52 during binding. In daily use, the user can set an application environment of the smart bracelet 52 in the smart cell phone 54 as "Automatically turn on the electric light after getting home" and "Automatically turn on the TV after getting home". The smart cell phone 54 takes the MAC address of the smart bracelet 52 as a trusted MAC address and sends the same to the electric light 56 and the TV 58.

When the user gets home, the smart cell phone 54 can acquire a current geographical location of the user using positioning technologies, and the current geographical location of the user matches with the location of the user's house; then the smart cell phone 54 can issue control commands to the smart bracelet 52. The smart bracelet 52 generates and broadcasts a Bluetooth beacon frame message containing a service information field and an event information field.

The value of the service information field may be 01101010. That is, the information carried by the 8 bits in the service information field is sequentially that: the smart bracelet has been bound with another device; the smart bracelet has established a Bluetooth connection with another device; the smart bracelet is currently a central device; the Bluetooth beacon frame message is not encrypted; the Bluetooth beacon frame message contains a MAC address field; the Bluetooth beacon frame message does not contain a capability field; the Bluetooth beacon frame message contains an event information field; the Bluetooth beacon frame message does not contain manufacturer-defined data.

The event information field contains an event identification field "electric light", "television"; and an event instruction---a power-on instruction "power_on ".

The electric light and the TV will receive the Bluetooth beacon frame message. When the electric light detects that the event identification field in the event information field contains its own identification "electric light", it will continue to detect if the MAC address of the smart bracelet 52 is a trusted MAC address. If the MAC address of the smart bracelet 52 is a trusted MAC address, the electric light executes the event instruction "power_on". When the TV detects that the event identification field in the event information field contains its own identification "television", it will continue to detect if the MAC address of the smart bracelet 52 is a trusted MAC address. If the MAC address of the smart bracelet 52 is a trusted MAC address, the TV executes the event instruction "power_on".

The followings are apparatus embodiments of this invention which are used to perform the method embodiments of this invention. The method embodiments of this invention may be referred to for the non-disclosed details of the apparatus embodiments of this invention.

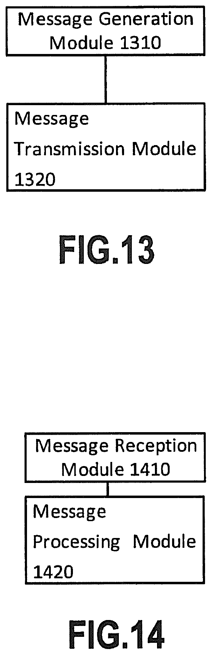

FIG. 13 is a block diagram showing the structure of a message transmission apparatus according to an exemplary embodiment of this invention. The message transmission apparatus may be realized by software, hardware or a combination thereof, and may form the whole or a part of an electronic device that can provide a message transmission method. The message transmission apparatus comprises:
a message generation module 1310 configured to generate a Bluetooth beacon frame message based on an interaction purpose with a second Bluetooth device; and
a message transmission module 1320 configured to broadcast the Bluetooth beacon frame message;
wherein the Bluetooth beacon frame message contains a field indicating the interaction purpose.

To sum up, by generating and broadcasting a Bluetooth beacon frame message by a first Bluetooth device, the Bluetooth beacon frame message containing a field indicating an interaction purpose, and receiving and processing the Bluetooth beacon frame message by the second Bluetooth device, the message transmission apparatus of the embodiment of this invention solves the problem that interaction can be performed only when a first Bluetooth device has established connection with a second Bluetooth device, and information interaction can be performed using a field indicating an interaction purpose and contained in a Bluetooth beacon frame message without establishing a Bluetooth connection between the first and second Bluetooth devices.

Optionally, the Bluetooth beacon frame message contains a service information field; and
the service information field comprises current operation data of a first Bluetooth device;
or the service information field comprises message composition information of the Bluetooth beacon frame message;
or the service information field comprises current operation data of the first Bluetooth device and message composition information of the Bluetooth beacon frame message.

Optionally, the service information field comprises at least one of:
a first bit indicating whether the first Bluetooth device has been bound with another Bluetooth device;
a second bit indicating whether the first Bluetooth device has established a Bluetooth connection with another Bluetooth device;
a third bit indicating whether the first Bluetooth device is a central device or a peripheral device;
a fourth bit indicating whether the Bluetooth beacon frame message has been encrypted;
a fifth bit indicating whether the Bluetooth beacon frame message carries a medium access control (MAC) address of the first Bluetooth device;
a sixth bit indicating whether the Bluetooth beacon frame message carries a capability field;
a seventh bit indicating whether the Bluetooth beacon frame message carries an event information field; and
an eighth bit indicating whether the Bluetooth beacon frame message carries manufacturer-defined data.

Optionally, the Bluetooth beacon frame message comprises a capability field indicating capabilities of the first Bluetooth device.

Optionally, the capability field comprises at least one of:
a ninth bit indicating whether the first Bluetooth device has a capability to establish a Bluetooth connection;
a tenth bit indicating whether the first Bluetooth device has a capability to serve as a central device;
an eleventh bit indicating whether the first Bluetooth device has an encryption capability; and
a twelfth bit indicating whether the first Bluetooth device has input and output capabilities.

Optionally, the Bluetooth beacon frame message comprises an event information field comprising an event instruction for controlling the second Bluetooth device.

Optionally, the event information field comprises:
an event identification field indicating the second Bluetooth device; and
an event instruction indicating an event to be executed by the second Bluetooth device.

Optionally, the event information field comprises:
an event instruction indicating an event to be executed by a default second Bluetooth device.

Optionally, the Bluetooth beacon frame message further comprises a device identification field indicating a device name of the first Bluetooth device.

Optionally, the Bluetooth beacon frame message further comprises a MAC address field indicating a MAC address of the first Bluetooth device.

Optionally, the Bluetooth beacon frame message further comprises a frame control field comprising at least one of:
a thirteenth bit indicating whether the Bluetooth beacon frame message carries manufacturer-defined subtitle data; and
a fourteenth bit indicating whether the Bluetooth beacon frame message is a binding acknowledgement message.

Optionally, the Bluetooth beacon frame message further comprises a frame counter field indicating a frame sequence of the Bluetooth beacon frame message.

To sum up, since the Bluetooth beacon frame message contains a service information field, this apparatus can allow the second Bluetooth device to acquire the current operation data of the first Bluetooth device and/or the composition of the message information, even if a Bluetooth connection between the first and second Bluetooth devices is not established.

To sum up, since the Bluetooth beacon frame message comprises a capability field, this apparatus can allow the second Bluetooth device to acquire the capabilities of the first Bluetooth device, even if a Bluetooth connection between the first and second Bluetooth devices is not established.

To sum up, since the Bluetooth beacon frame message comprises an event information field, this apparatus can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

To sum up, since the Bluetooth beacon frame message further comprises a frame counter field in this apparatus, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

FIG. 14 is a block diagram showing the structure of a message reception apparatus according to an exemplary embodiment of this invention. The message reception apparatus may be realized by software, hardware or a combination thereof, and may form the whole or a part of an electronic device that can provide a message reception method. The message reception apparatus comprises:
a message reception module 1410 configured to receive a Bluetooth beacon frame message broadcast by a first Bluetooth device, the Bluetooth beacon frame message containing a field indicating an interaction purpose; and
a message processing module 1420 configured to process the field in the Bluetooth beacon frame message.

To sum up, by generating and broadcasting a Bluetooth beacon frame message by a first Bluetooth device, the Bluetooth beacon frame message containing at least one of a service information field, a capability field and an event information field, and receiving, parsing and processing the Bluetooth beacon frame message by the second Bluetooth device, the message reception apparatus of the embodiment of this invention realizes information access and wireless control between the first and second Bluetooth devices, solves the problem that interaction can be performed only when a first Bluetooth device has established connection with a second Bluetooth device, and achieves the effects of simplifying users' operations, saving time for information access and wireless control, and improving the user experience.

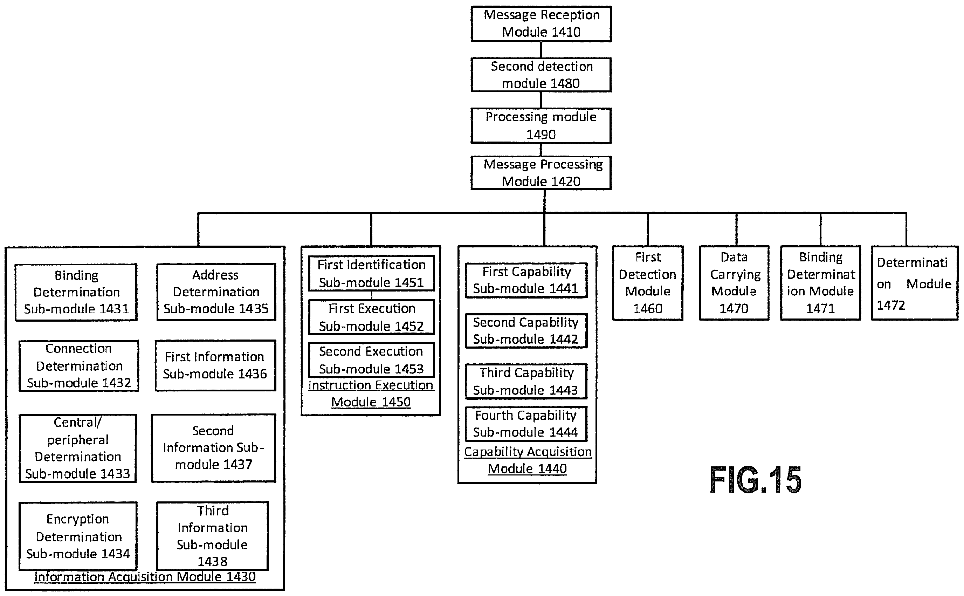

FIG. 15 is a block diagram showing the structure of a message reception apparatus according to another exemplary embodiment of this invention. The message reception apparatus may be realized by software, hardware or a combination thereof, and may form the whole or a part of an electronic device that can provide a message reception method. The message reception apparatus comprises:
a message reception module 1410 configured to receive a Bluetooth beacon frame message broadcast by a first Bluetooth device, the Bluetooth beacon frame message containing a field indicating an interaction purpose; and
a message processing module 1420 configured to process the field in the Bluetooth beacon frame message.

When the Bluetooth beacon frame message comprises a service information field, the apparatus further comprises: an information acquisition module 1430 configured to acquire current operation data of the first Bluetooth device based on the service information field,
or acquire message composition information of the Bluetooth beacon frame message based on the service information field,
or acquire current operation data of the first Bluetooth device based on the service information field, and acquire message composition information of the Bluetooth beacon frame message based on the service information field.

The information acquisition module 1430 comprises at least one of:
a binding determination sub-module 1431 configured to acquire whether the first Bluetooth device has been bound with another Bluetooth device based on a first bit of the service information field;
a connection determination sub-module 1432 configured to acquire whether the first Bluetooth device has established a Bluetooth connection with another Bluetooth device based on a second bit of the service information field; and
a central/peripheral determination sub-module 1433 configured to acquire whether the first Bluetooth device is a central device or a peripheral device based on a third bit of the service information field;
an encryption determination sub-module 1434 configured to acquire whether the Bluetooth beacon frame message has been encrypted based on a fourth bit of the service information field;
an address determination sub-module 1435 configured to acquire whether the Bluetooth beacon frame message carries a MAC address of the first Bluetooth device based on a fifth bit of the service information field;
a first information sub-module 1436 configured to acquire whether the Bluetooth beacon frame message carries a capability field based on a sixth bit of the service information field;
a second information sub-module 1437 configured to acquire whether the Bluetooth beacon frame message carries an event information field based on a seventh bit of the service information field; and
a third information sub-module 1438 configured to acquire whether the Bluetooth beacon frame message carries manufacturer-defined data based on an eighth bit of the service information field.

When the Bluetooth beacon frame message comprises a capability field, said apparatus further comprises a capability acquisition module 1440 configured to acquire the capabilities of the first Bluetooth device based on the capability field.

The capability acquisition module 1440 comprises at least one of:
a first capability sub-module 1441 configured to acquire whether the first Bluetooth device has a capability to establish a Bluetooth connection based on a ninth bit of the capability field;
a second capability sub-module 1442 configured to acquire whether the first Bluetooth device has a capability to serve as a central device based on a tenth bit of the capability field;
a third capability sub-module 1443 configured to acquire whether the first Bluetooth device has an encryption capability based on an eleventh bit of the capability field;
a fourth capability sub-module 1444 configured to acquire whether the first Bluetooth device has input and output capabilities based on a twelfth bit of the capability field.

When the Bluetooth beacon frame message comprises the capability field, and said apparatus further comprises an instruction execution module 1450.

The instruction execution module 1450 comprises:
a first identification sub-module 1451 configured to detect whether an event identification in the event information field comprises an identification of the second Bluetooth device;
a first execution sub-module 1452 configured to, if the event identification in the event information field comprises an identification of the second Bluetooth device, execute the event instruction corresponding to the identification of the second Bluetooth device;
a second execution sub-module 1453 configured to execute an event instruction to be executed by a default second Bluetooth device.

The Bluetooth beacon frame message further comprises a device identification field indicating a device name of the first Bluetooth device.

When the Bluetooth beacon frame message further comprises a MAC address field, the apparatus further comprises:
a first detection module 1460 configured to detect whether a MAC address of the first Bluetooth device is a trusted MAC address based on the MAC address field.

When the Bluetooth beacon frame message further comprises a frame control field, the apparatus further comprises:
a data carrying module 1470 configured to determine whether the Bluetooth beacon frame message carries manufacturer-defined subtitle data based on a thirteenth bit of the frame control field;
a binding determination module 1471 configured to determine whether the Bluetooth beacon frame message is a binding acknowledgement message based on a fourteenth bit of the frame control field;
a determination module 1472 configured to determine whether the Bluetooth beacon frame message carries manufacturer-defined subtitle data based on a thirteenth bit of the frame control field, and determine whether the Bluetooth beacon frame message is a binding acknowledgement message based on a fourteenth bit of the frame control field.

When the Bluetooth beacon frame message further comprises a frame counter field, the apparatus further comprises:
a second detection module 1480 configured to detect whether another Bluetooth beacon frame message having the frame sequence has been processed;
a processing module 1490 configured to, if another Bluetooth beacon frame message having the frame sequence has been processed, not process the Bluetooth beacon frame message.

To sum up, by generating and broadcasting a Bluetooth beacon frame message by a first Bluetooth device, the Bluetooth beacon frame message containing a field indicating an interaction purpose, receiving and processing the Bluetooth beacon frame message by the second Bluetooth device, the message reception apparatus of the embodiment of this invention solves the problem that interaction can be performed only when a first Bluetooth device has established connection with a second Bluetooth device, and information interaction can be performed using a field indicating an interaction purpose and contained in a Bluetooth beacon frame message without establishing a Bluetooth connection between the first and second Bluetooth devices.

To sum up, since the Bluetooth beacon frame message contains a service information field, this apparatus can allow the second Bluetooth device to acquire the current operation status of the first Bluetooth device and/or the composition of the message information, even if a Bluetooth connection between the first and second Bluetooth devices is not established.

To sum up, since the Bluetooth beacon frame message comprises a capability field, this apparatus can allow the second Bluetooth device to acquire the capabilities of the first Bluetooth device, even if a Bluetooth connection between the first and second Bluetooth devices is not established.

To sum up, since the Bluetooth beacon frame message comprises an event information field, this apparatus can allow the first Bluetooth device to wirelessly control the second Bluetooth device or multiple second Bluetooth devices, even if a Bluetooth connection between the first and second Bluetooth devices is not established. But in the related arts, the first Bluetooth device can only control one second Bluetooth device after a Bluetooth connection between the first and second Bluetooth devices is established.

To sum up, since the Bluetooth beacon frame message further comprises a frame counter field in this apparatus, the transmitted Bluetooth beacon frame message can be marked with a frame sequence of the frame counter field, and it can be detected if another Bluetooth beacon frame message having the frame sequence has been processed. Therefore, repeated processing of messages is avoided, and waste of device resources is reduced.

This invention also provide a message transmission apparatus, comprising:
a processor; and
a memory configured to store an instruction executable by the processor,
wherein the processor is configured to:
   control a first Bluetooth device to generate a Bluetooth beacon frame message based on an interaction purpose with a second Bluetooth device; and
   broadcast the Bluetooth beacon frame message;
   wherein the Bluetooth beacon frame message contains a field indicating the interaction purpose.

This invention also provide a message reception apparatus, comprising:
a processor; and
a memory configured to store an instruction executable by the processor,
wherein the processor is configured to:
   receive a Bluetooth beacon frame message broadcast by a first Bluetooth device, the Bluetooth beacon frame message containing a field indicating an interaction purpose; and
   process the field in the Bluetooth beacon frame message.

With respect to the apparatuses in the above embodiments, the specific manners for performing operations for individual modules therein have been described in detail in the embodiments regarding the related methods, which will not be elaborated herein.

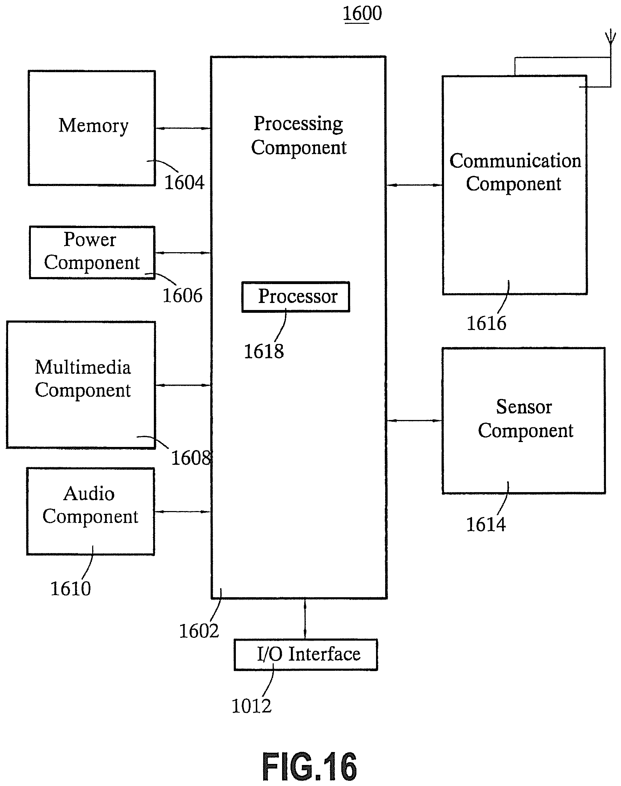

FIG. 16 is a block diagram of an apparatus for performing a message transceiving method according to an exemplary embodiment of this invention. For example, the apparatus 1600 may be a mobile phone, a computer, a digital broadcast terminal, a messaging device, a gaming console, a tablet, a medical device, a fitness equipment, a personal digital assistant or the like.

Referring to Fig.16, the apparatus 1600 may include one or more of the following components: a processing component 1602, a memory 1604, a power component 1606, a multimedia component 1608, an audio component 1610, an input/output (I/O) interface 1612, a sensor component 1614, and a communication component 1616.

The communication component 1616 is provided with a Bluetooth module inside. The Bluetooth module supports a standard Bluetooth low energy BLE protocol, and comprises a control chip and a Bluetooth chip connected to the control chip.

The processing component 1602 typically controls overall operations of the apparatus 1600, such as the operations associated with display, telephone calls, data communications, camera operations, and recording operations. The processing component 1602 may include one or more processors 1618 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the apparatus 1600. Examples of such data include instructions for any applications or methods operated on the apparatus 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the apparatus 1600. The power component 1606 may include a power supply management system, one or more power sources, and any other components associated with the generation, management, and distribution of power in the apparatus 1600.

The multimedia component 1608 includes a screen providing an output interface between the apparatus 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and/or the rear camera may receive an external multimedia datum while the apparatus 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user contact with the apparatus 1600, an orientation or an acceleration/deceleration of the apparatus 1600, and a change in temperature of the apparatus 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the apparatus 1600 and other devices. The apparatus 1600 can access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described message transmission and reception methods.

In exemplary embodiments, there is also provided a non-transitory computer-readable storage medium including instructions, such as included in the memory 1604, executable by the processor 1618 in the apparatus 1600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A message transmission method, performed by a first Bluetooth device and comprises:
generating a Bluetooth beacon frame message based on an interaction purpose with a second Bluetooth device; and
broadcasting the Bluetooth beacon frame message;
wherein the Bluetooth beacon frame message contains a field indicating the interaction purpose,
**characterized in that** the Bluetooth beacon frame message comprises an event information field comprising an event instruction for controlling the second Bluetooth device;
the event information field comprises:
an event identification field indicating the second Bluetooth device; and
an event instruction indicating an event to be executed by the second Bluetooth device,
the beacon frame message is processed at the second Bluetooth device by:
executing an event instruction corresponding to the second Bluetooth device in the event information field based on the event information field;
said executing an event instruction corresponding to the second Bluetooth device in the event information field based on the event information field comprises:
detecting whether an event identification in the event information field comprises an identification of the second Bluetooth device;
if the event identification in the event information field comprises an identification of the second Bluetooth device, executing the event instruction corresponding to identification of the second Bluetooth device.

2. The method according to claim 1, **characterized in that** the Bluetooth beacon frame message contains a service information field; and
the service information field comprises at least one of current operation data of the first Bluetooth device and message composition information of the Bluetooth beacon frame message.

3. The method according to claim 2, **characterized in that** the service information field comprises at least one of:
a first bit indicating whether the first Bluetooth device has been bound with another Bluetooth device;
a second bit indicating whether the first Bluetooth device has established a Bluetooth connection with another Bluetooth device;
a third bit indicating whether the first Bluetooth device is a central device or a peripheral device;
a fourth bit indicating whether the Bluetooth beacon frame message has been encrypted;
a fifth bit indicating whether the Bluetooth beacon frame message carries a medium access control (MAC) address of the first Bluetooth device;
a sixth bit indicating whether the Bluetooth beacon frame message carries a capability field;
a seventh bit indicating whether the Bluetooth beacon frame message carries an event information field; and
an eighth bit indicating whether the Bluetooth beacon frame message carries manufacturer-defined data.

4. The method according to claim 1, **characterized in that** the Bluetooth beacon frame message comprises a capability field indicating capabilities of the first Bluetooth device.

5. The method according to claim 4, **characterized in that** the capability field comprises at least one of:
a ninth bit indicating whether the first Bluetooth device has a capability to establish a Bluetooth connection;
a tenth bit indicating whether the first Bluetooth device has a capability to serve as a central device;
an eleventh bit indicating whether the first Bluetooth device has an encryption capability; and
a twelfth bit indicating whether the first Bluetooth device has input and output capabilities.

6. The method according to claim 1,
the event information field comprises:
an event instruction indicating an event to be executed by a default second Bluetooth device.

7. The method according to any of claims 1-6, **characterized in that** the Bluetooth beacon frame message further comprises a device identification field indicating a device name of the first Bluetooth device; or the Bluetooth beacon frame message further comprises a MAC address field indicating a MAC address of the first Bluetooth device; or the Bluetooth beacon frame message further comprises a frame control field comprising at least one of:
a thirteenth bit indicating whether the Bluetooth beacon frame message carries manufacturer-defined subtitle data; and
a fourteenth bit indicating whether the Bluetooth beacon frame message is a binding acknowledgement message; or the Bluetooth beacon frame message further comprises a frame counter field indicating a frame sequence of the Bluetooth beacon frame message.

8. A message reception method, performed by a second Bluetooth device and comprises:
receiving a Bluetooth beacon frame message broadcast by a first Bluetooth device, the Bluetooth beacon frame message containing a field indicating an interaction purpose; and
processing the field in the Bluetooth beacon frame message,
**characterized in that** the field indicating the interaction purpose contains an event information field,
said processing the field in the Bluetooth beacon frame message comprises:
executing an event instruction corresponding to the second Bluetooth device in the event information field based on the event information field;
said executing an event instruction corresponding to the second Bluetooth device in the event information field based on the event information field comprises:
detecting whether an event identification in the event information field comprises an identification of the second Bluetooth device;
if the event identification in the event information field comprises an identification of the second Bluetooth device, executing the event instruction corresponding to identification of the second Bluetooth device.

9. The method according to claim 8, **characterized in that** the Bluetooth beacon frame message comprises a service information field; and
said processing the field in the Bluetooth beacon frame message comprises:
acquiring current operation data of the first Bluetooth device based on the service information field;
or acquiring message composition information of the Bluetooth beacon frame message based on the service information field;
or acquiring current operation data of the first Bluetooth device based on the service information field, and acquiring message composition information of the Bluetooth beacon frame message based on the service information field.

10. A system comprising a message transmission apparatus which comprises a first Bluetooth device, comprising:
a message generation module configured to generate a Bluetooth beacon frame message based on an interaction purpose with a second Bluetooth device; and
a message transmission module configured to broadcast the Bluetooth beacon frame message;
wherein the Bluetooth beacon frame message contains a field indicating the interaction purpose,
**characterized in that** the Bluetooth beacon frame message comprises an event information field comprising an event instruction for controlling the second Bluetooth device;
the event information field comprises:
an event identification field indicating the second Bluetooth device; and
an event instruction indicating an event to be executed by the second Bluetooth device,
the system further comprising a message reception apparatus which comprises the second Bluetooth device, comprising:
a message reception module configured to receive the Bluetooth beacon frame message broadcast by the first Bluetooth device; and
a message processing module configured to process the field in the Bluetooth beacon frame message,
**characterized in that** the apparatus further comprising: an instruction execution module configured to execute an event instruction corresponding to a second Bluetooth device in the event information field,
the instruction execution module comprises:
a first identification sub-module configured to detect whether an event identification in the event information field comprises an identification of the second Bluetooth device;
a first execution sub-module configured to, when the event identification in the event information field comprises an identification of the second Bluetooth device, execute the event instruction corresponding to the identification of the second Bluetooth device..

11. A message reception apparatus, comprising:
a message reception module configured to receive a Bluetooth beacon frame message broadcast by a first Bluetooth device, the Bluetooth beacon frame message containing a field indicating an interaction purpose; and
a message processing module configured to process the field in the Bluetooth beacon frame message,
**characterized in that** the field indicating the interaction purpose contains an event information field, the apparatus further comprising: an instruction execution module configured to execute an event instruction corresponding to a second Bluetooth device in the event information field,
the instruction execution module comprises:
a first identification sub-module configured to detect whether an event identification in the event information field comprises an identification of the second Bluetooth device;
a first execution sub-module configured to, when the event identification in the event information field comprises an identification of the second Bluetooth device, execute the event instruction corresponding to the identification of the second Bluetooth device.

12. A system comprising a message transmission apparatus, comprising:
a processor; and
a memory configured to store an instruction executable by the processor,
wherein the processor is configured to:
control a first Bluetooth device to generate a Bluetooth beacon frame message based on an interaction purpose with a second Bluetooth device; and
broadcast the Bluetooth beacon frame message;
wherein the Bluetooth beacon frame message contains a field indicating the interaction purpose,
**characterized in that** the Bluetooth beacon frame message comprises an event information field comprising an event instruction for controlling the second Bluetooth device;
the event information field comprises:
an event identification field indicating the second Bluetooth device; and
an event instruction indicating an event to be executed by the second Bluetooth device,
the system further comprising a message reception apparatus, comprising:
a processor; and
a memory configured to store an instruction executable by the processor,
wherein the processor is configured to:
receive the Bluetooth beacon frame message broadcast by the first Bluetooth device; and
process the field in the Bluetooth beacon frame message,
said processing the field in the Bluetooth beacon frame message comprises:
executing an event instruction corresponding to the second Bluetooth device in the event information field based on the event information field;
said executing an event instruction corresponding to the second Bluetooth device in the event information field based on the event information field comprises:
detecting whether an event identification in the event information field comprises an identification of the second Bluetooth device;
when the event identification in the event information field comprises an identification of the second Bluetooth device, executing the event instruction corresponding to identification of the second Bluetooth device.

13. A message reception apparatus, comprising:
a processor; and
a memory configured to store an instruction executable by the processor,
wherein the processor is configured to:
receive a Bluetooth beacon frame message broadcast by a first Bluetooth device, the Bluetooth beacon frame message containing a field indicating an interaction purpose; and
process the field in the Bluetooth beacon frame message,
**characterized in that** the field indicating the interaction purpose contains an event information field,
said processing the field in the Bluetooth beacon frame message comprises:
executing an event instruction corresponding to the second Bluetooth device in the event information field based on the event information field;
said executing an event instruction corresponding to the second Bluetooth device in the event information field based on the event information field comprises:
detecting whether an event identification in the event information field comprises an identification of the second Bluetooth device;
when the event identification in the event information field comprises an identification of the second Bluetooth device, executing the event instruction corresponding to identification of the second Bluetooth device.

14. A computer program including instructions for executing the steps of a message transmission method according to any one of claims 1 to 7 when said program is executed by a computer.

15. A recording medium readable by a computer and having recorded thereon a computer program including instructions for executing the steps of a message transmission method according to any one of claims 1 to 7.

## Patentansprüche

1. Nachrichten-Übertragungsverfahren, das durch eine erste Bluetooth-Vorrichtung durchgeführt wird und umfasst:
Erzeugen einer Bluetooth-Funkbaken-Rahmennachricht auf der Grundlage eines Interaktionszwecks mit einer zweiten Bluetooth-Vorrichtung und
Senden der Bluetooth-Funkbaken-Rahmennachricht,
wobei die Bluetooth-Funkbaken-Rahmennachricht ein Feld enthält, das den Interaktionszweck angibt,
**dadurch gekennzeichnet, dass** die Bluetooth-Funkbaken-Rahmennachricht ein Ereignis-Informationsfeld umfasst, das eine Ereignisanweisung zum Steuern der zweiten Bluetooth-Vorrichtung umfasst,
wobei das Ereignis-Informationsfeld umfasst:
ein Ereignis-Identifikationsfeld, das die zweite Bluetooth-Vorrichtung angibt, und
eine Ereignisanweisung, die ein Ereignis angibt, das durch die zweite Bluetooth-Vorrichtung ausgeführt werden soll,
wobei die Funkbaken-Rahmennachricht bei der zweiten Bluetooth-Vorrichtung verarbeitet wird durch:
Ausführen einer Ereignisanweisung, die der zweiten Bluetooth-Vorrichtung in dem Ereignis-Informationsfeld entspricht, auf der Grundlage des Ereignis-Informationsfelds,
wobei das Ausführen einer Ereignisanweisung, die der zweiten Bluetooth-Vorrichtung in dem Ereignis-Informationsfeld entspricht, auf der Grundlage des Ereignis-Informationsfelds, umfasst:
Detektieren, ob eine Ereignisidentifizierung in dem Ereignis-Informationsfeld eine Identifizierung der zweiten Bluetooth-Vorrichtung umfasst,
wenn die Ereignisidentifizierung in dem Ereignis-Informationsfeld eine Identifizierung der zweiten Bluetooth-Vorrichtung umfasst, Ausführen der Ereignisanweisung, die der Identifizierung der zweiten Bluetooth-Vorrichtung entspricht.

2. Verfahren nach Anspruch 1, **dadurch gekennzeichnet, dass** die Bluetooth-Funkbaken-Rahmennachricht ein Dienst-Informationsfeld enthält und
das Dienst-Informationsfeld mindestens eines von aktuellen Betriebsdaten der ersten Bluetooth-Vorrichtung und Nachrichten-Zusammensetzungsinformationen der Bluetooth-Funkbaken-Rahmennachricht umfasst.

3. Verfahren nach Anspruch 2, **dadurch gekennzeichnet, dass** das Dienst-Informationsfeld mindestens eines umfasst von:
einem ersten Bit, das angibt, ob die erste Bluetooth-Vorrichtung mit einer anderen Bluetooth-Vorrichtung verbunden war,
einem zweiten Bit, das angibt, ob die erste Bluetooth-Vorrichtung eine Bluetooth-Verbindung mit einer anderen Bluetooth-Vorrichtung hergestellt hat,
einem dritten Bit, das angibt, ob die erste Bluetooth-Vorrichtung eine zentrale Vorrichtung oder eine periphere Vorrichtung ist,
einem vierten Bit, das angibt, ob die Bluetooth-Funkbaken-Rahmennachricht verschlüsselt war,
einem fünften Bit, das angibt, ob die Bluetooth-Funkbaken-Rahmennachricht eine Medienzugriffssteuerungs-(MAC)-Adresse der ersten Bluetooth-Vorrichtung trägt,
einem sechsten Bit, das angibt, ob die Bluetooth-Funkbaken-Rahmennachricht ein Fähigkeitsfeld trägt,
einem siebten Bit, das angibt, ob die Bluetooth-Funkbaken-Rahmennachricht ein Ereignis-Informationsfeld trägt, und
einem achten Bit, das angibt, ob die Bluetooth-Funkbaken-Rahmennachricht vom Hersteller definierte Daten trägt.

4. Verfahren nach Anspruch 1, **dadurch gekennzeichnet, dass** die Bluetooth-Funkbaken-Rahmennachricht ein Fähigkeitsfeld umfasst, das Fähigkeiten der ersten Bluetooth-Vorrichtung angibt.

5. Verfahren nach Anspruch 4, **dadurch gekennzeichnet, dass** das Fähigkeitsfeld mindestens eines umfasst von:
einem neunten Bit, das angibt, ob die erste Bluetooth-Vorrichtung eine Fähigkeit zum Herstellen einer Bluetooth-Verbindung aufweist,
einem zehnten Bit, das angibt, ob die erste Bluetooth-Vorrichtung eine Fähigkeit zum Dienen als eine zentrale Vorrichtung aufweist,
einem elften Bit, das angibt, ob die erste Bluetooth-Vorrichtung eine Verschlüsselungsfähigkeit aufweist, und
einem zwölften Bit, das angibt, ob die erste Bluetooth-Vorrichtung Eingabe- und Ausgabefähigkeiten aufweist.

6. Verfahren nach Anspruch 1,
wobei das Ereignis-Informationsfeld umfasst:
eine Ereignisanweisung, die ein Ereignis angibt, das durch eine standardmäßige zweite Bluetooth-Vorrichtung ausgeführt werden soll.

7. Verfahren nach einem der Ansprüche 1 - 6, **dadurch gekennzeichnet, dass** die Bluetooth-Funkbaken-Rahmennachricht ferner ein Vorrichtungsidentifizierungsfeld umfasst, das eine Vorrichtungsbezeichnung der ersten Bluetooth-Vorrichtung angibt, oder die Bluetooth-Funkbaken-Rahmennachricht ferner ein MAC-Adressenfeld umfasst, das eine MAC-Adresse der ersten Bluetooth-Vorrichtung angibt, oder die Bluetooth-Funkbaken-Rahmennachricht ferner ein Rahmen-Steuerfeld umfasst, das mindestens eines umfasst von:
einem dreizehnten Bit, das angibt, ob die Bluetooth-Funkbaken-Rahmennachricht vom Hersteller definierte Untertiteldaten trägt, und
einem vierzehnten Bit, das angibt, ob die Bluetooth-Funkbaken-Rahmennachricht eine bindende Bestätigungsnachricht ist, oder die Bluetooth-Funkbaken-Rahmennachricht ferner ein Rahmen-Zählerfeld umfasst, das eine Rahmensequenz der Bluetooth-Funkbaken-Rahmennachricht angibt.

8. Nachrichten-Empfangsverfahren, das durch eine zweite Bluetooth-Vorrichtung durchgeführt wird und umfasst:
Empfangen einer Bluetooth-Funkbaken-Rahmennachricht, die durch eine erste Bluetooth-Vorrichtung gesendet wird, wobei die Bluetooth-Funkbaken-Rahmennachricht ein Feld enthält, dass einen Interaktionszweck angibt, und
Verarbeiten des Felds in der Bluetooth-Funkbaken-Rahmennachricht,
**dadurch gekennzeichnet, dass** das Feld, das den Interaktionszweck angibt, ein Ereignis-Informationsfeld enthält,
wobei das Verarbeiten des Felds in der Bluetooth-Funkbaken-Rahmennachricht umfasst:
Ausführen einer Ereignisanweisung, die der zweiten Bluetooth-Vorrichtung in dem Ereignis-Informationsfeld entspricht, auf der Grundlage des Ereignis-Informationsfelds,
wobei das Ausführen einer Ereignisanweisung, die der zweiten Bluetooth-Vorrichtung in dem Ereignis-Informationsfeld entspricht, auf der Grundlage des Ereignis-Informationsfelds umfasst:
Detektieren, ob eine Ereignisidentifizierung in dem Ereignis-Informationsfeld eine Identifizierung der zweiten Bluetooth-Vorrichtung umfasst,
wenn die Ereignisidentifizierung in dem Ereignis-Informationsfeld eine Identifizierung der zweiten Bluetooth-Vorrichtung umfasst, Ausführen der Ereignisanweisung, die der Identifizierung der zweiten Bluetooth-Vorrichtung entspricht.

9. Verfahren nach Anspruch 8, **dadurch gekennzeichnet, dass** die Bluetooth-Funkbaken-Rahmennachricht ein Dienst-Informationsfeld umfasst, und
das Verarbeiten des Felds in der Bluetooth-Funkbaken-Rahmennachricht umfasst:
Erlangen von aktuellen Betriebsdaten der ersten Bluetooth-Vorrichtung auf der Grundlage des Dienst-Informationsfelds
oder Erlangen von Nachrichten-Zusammensetzungsinformationen der Bluetooth-Funkbaken-Rahmennachricht auf der Grundlage des Dienst-Informationsfelds
oder Erlangen von aktuellen Betriebsdaten der ersten Bluetooth-Vorrichtung auf der Grundlage des Dienst-Informationsfelds und Erlangen von Nachrichten-Zusammensetzungsinformationen der Bluetooth-Funkbaken-Rahmennachricht auf der Grundlage des Dienst-Informationsfelds.

10. System, das eine Nachrichten-Übertragungseinrichtung umfasst, die eine erste Bluetooth-Vorrichtung umfasst, umfassend:
ein Nachrichten-Erzeugungsmodul, das dazu ausgestaltet ist, eine Bluetooth-Funkbaken-Rahmennachricht auf der Grundlage eines Interaktionszwecks mit einer zweiten Bluetooth-Vorrichtung zu erzeugen, und
ein Nachrichten-Übertragungsmodul, das dazu ausgestaltet ist, die Bluetooth-Funkbaken-Rahmennachricht zu senden,
wobei die Bluetooth-Funkbaken-Rahmennachricht ein Feld enthält, das den Interaktionszweck angibt,
**dadurch gekennzeichnet, dass** die Bluetooth-Funkbaken-Rahmennachricht ein Ereignis-Informationsfeld umfasst, das eine Ereignisanweisung zum Steuern der zweiten Bluetooth-Vorrichtung umfasst,
wobei das Ereignis-Informationsfeld umfasst:
ein Ereignis-Identifizierungsfeld, das die zweite Bluetooth-Vorrichtung angibt, und
eine Ereignisanweisung, die ein Ereignis angibt, das durch die zweite Bluetooth-Vorrichtung ausgeführt werden soll,
wobei das System ferner eine Nachrichten-Empfangseinrichtung umfasst, welche die zweite Bluetooth-Vorrichtung umfasst, umfassend:
ein Nachrichten-Empfangsmodul, das dazu ausgestaltet ist, die Bluetooth-Funkbaken-Rahmennachricht zu empfangen, die durch die erste Bluetooth-Vorrichtung gesendet wird, und
ein Nachrichten-Verarbeitungsmodul, das dazu ausgestaltet ist, das Feld in der Bluetooth-Funkbaken-Rahmennachricht zu verarbeiten,
**dadurch gekennzeichnet, dass** die Einrichtung ferner umfasst: ein Anweisungsausführungsmodul, das dazu ausgestaltet ist, eine Ereignisanweisung auszuführen, die einer zweiten Bluetooth-Vorrichtung in dem Ereignis-Informationsfeld entspricht,
wobei das Anweisungsausführungsmodul umfasst:
ein erstes Identifizierungsteilmodul, das dazu ausgestaltet ist, zu detektieren, ob eine Ereignisidentifizierung in dem Ereignis-Informationsfeld eine Identifizierung der zweiten Bluetooth-Vorrichtung umfasst,
ein erstes Ausführungsteilmodul, das dazu ausgestaltet ist, wenn die Ereignisidentifizierung in dem Ereignis-Informationsfeld eine Identifizierung der zweiten Bluetooth-Vorrichtung umfasst, die Ereignisanweisung auszuführen, die der Identifizierung der zweiten Bluetooth-Vorrichtung entspricht.

11. Nachrichten-Empfangseinrichtung, umfassend:
ein Nachrichten-Empfangsmodul, das dazu ausgestaltet ist, eine Bluetooth-Funkbaken-Rahmennachricht zu empfangen, die durch eine erste Bluetooth-Vorrichtung gesendet wird, wobei die Bluetooth-Funkbaken-Rahmennachricht ein Feld enthält, das einen Interaktionszweck angibt, und
ein Nachrichten-Verarbeitungsmodul, das dazu ausgestaltet ist, das Feld in der Bluetooth-Funkbaken-Rahmennachricht zu verarbeiten,
**dadurch gekennzeichnet, dass** das Feld, das den Interaktionszweck angibt, ein Ereignis-Informationsfeld enthält, wobei die Einrichtung ferner umfasst: ein Anweisungsausführungsmodul, das dazu ausgestaltet ist, eine Ereignisanweisung auszuführen, die einer zweiten Bluetooth-Vorrichtung in dem Ereignis-Informationsfeld entspricht,
wobei das Anweisungsausführungsmodul umfasst:
ein erstes Identifizierungsteilmodul, das dazu ausgestaltet ist, zu detektieren, ob eine Ereignisidentifizierung in dem Ereignis-Informationsfeld eine Identifizierung der zweiten Bluetooth-Vorrichtung umfasst,
ein erstes Ausführungsteilmodul, das dazu ausgestaltet ist, wenn die Ereignisidentifizierung in dem Ereignis-Informationsfeld eine Identifizierung der zweiten Bluetooth-Vorrichtung umfasst, die Ereignisanweisung auszuführen, die der Identifizierung der zweiten Bluetooth-Vorrichtung entspricht.

12. System, das eine Nachrichten-Übertragungseinrichtung umfasst, umfassend:
einen Prozessor und
einen Speicher, der dazu ausgestaltet ist, eine durch den Prozessor ausführbare Anweisung zu speichern,
wobei der Prozessor dazu ausgestaltet ist,
eine erste Bluetooth-Vorrichtung zu steuern, um eine Bluetooth-Funkbaken-Rahmennachricht auf der Grundlage eines Interaktionszwecks mit einer zweiten Bluetooth-Vorrichtung zu erzeugen, und
die Bluetooth-Funkbaken-Rahmennachricht zu senden,
wobei die Bluetooth-Funkbaken-Rahmennachricht ein Feld enthält, das den Interaktionszweck angibt,
**dadurch gekennzeichnet, dass** die Bluetooth-Funkbaken-Rahmennachricht ein Ereignis-Informationsfeld umfasst, das eine Ereignisanweisung zum Steuern der zweiten Bluetooth-Vorrichtung umfasst,
wobei das Ereignis-Informationsfeld umfasst:
ein Ereignis-Identifizierungsfeld, das die zweite Bluetooth-Vorrichtung angibt, und
eine Ereignisanweisung, die ein Ereignis angibt, das durch die zweite Bluetooth-Vorrichtung ausgeführt werden soll,
wobei das System ferner eine Nachrichten-Empfangseinrichtung umfasst, umfassend:
einen Prozessor und
einen Speicher, der dazu ausgelegt ist, eine durch den Prozessor ausführbare Anweisung zu speichern,
wobei der Prozessor dazu ausgelegt ist,
die Bluetooth-Funkbaken-Rahmennachricht, die durch die erste Bluetooth-Vorrichtung gesendet wird, zu empfangen und
das Feld in der Bluetooth-Funkbaken-Rahmennachricht zu verarbeiten,
wobei das Verarbeiten des Felds in der Bluetooth-Funkbaken-Rahmennachricht umfasst:
Ausführen einer Ereignisanweisung, die der zweiten Bluetooth-Vorrichtung in dem Ereignis-Informationsfeld entspricht, auf der Grundlage des Ereignis-Informationsfelds,
wobei das Ausführen einer Ereignisanweisung, die der zweiten Bluetooth-Vorrichtung in dem Ereignis-Informationsfeld entspricht, auf der Grundlage des Ereignis-Informationsfelds umfasst:
Detektieren, ob eine Ereignisidentifizierung in dem Ereignis-Informationsfeld eine Identifizierung der zweiten Bluetooth-Vorrichtung umfasst,
wenn die Ereignisidentifizierung in dem Ereignis-Informationsfeld eine Identifizierung der zweiten Bluetooth-Vorrichtung umfasst, Ausführen der Ereignisanweisung, die der Identifizierung der zweiten Bluetooth-Vorrichtung entspricht.

13. Nachrichten-Empfangseinrichtung, umfassend:
einen Prozessor und
einen Speicher, der dazu ausgelegt ist, eine durch den Prozessor ausführbare Anweisung zu speichern,
wobei der Prozessor dazu ausgelegt ist,
eine Bluetooth-Funkbaken-Rahmennachricht zu empfangen, die durch eine erste Bluetooth-Vorrichtung gesendet wird, wobei die Bluetooth-Funkbaken-Rahmennachricht ein Feld enthält, das einen Interaktionszweck angibt, und
das Feld in der Bluetooth-Funkbaken-Rahmennachricht zu verarbeiten,
**dadurch gekennzeichnet, dass** das Feld, das den Interaktionszweck angibt, ein Ereignis-Informationsfeld enthält,
wobei das Verarbeiten des Felds in der Bluetooth-Funkbaken-Rahmennachricht umfasst:
Ausführen einer Ereignisanweisung, die der zweiten Bluetooth-Vorrichtung in dem Ereignis-Informationsfeld entspricht, auf der Grundlage des Ereignis-Informationsfelds,
wobei das Ausführen einer Ereignisanweisung, die der zweiten Bluetooth-Vorrichtung in dem Ereignis-Informationsfeld entspricht, auf der Grundlage des Ereignis-Informationsfelds umfasst:
Detektieren, ob eine Ereignisidentifizierung in dem Ereignis-Informationsfeld eine Identifizierung der zweiten Bluetooth-Vorrichtung umfasst,
wenn die Ereignisidentifizierung in dem Ereignis-Informationsfeld eine Identifizierung der zweiten Bluetooth-Vorrichtung umfasst, Ausführen der Ereignisanweisung, die der Identifizierung der zweiten Bluetooth-Vorrichtung entspricht.

14. Computerprogramm, das Anweisungen zum Ausführen der Schritte eines Nachrichten-Übertragungsverfahrens nach einem der Ansprüche 1 bis 7 beinhaltet, wenn das Programm durch einen Computer ausgeführt wird.

15. Aufzeichnungsmedium, das durch einen Computer gelesen werden kann und auf dem ein Computerprogramm aufgezeichnet ist, das Anweisungen zum Ausführen der Schritte eines Nachrichten-Übertragungsverfahrens nach einem der Ansprüche 1 bis 7 beinhaltet.

## Revendications

1. Procédé d'émission de message, réalisé par un premier dispositif Bluetooth et qui comprend :
la génération d'un message de trame de balise Bluetooth sur la base d'un objectif d'interaction avec un second dispositif Bluetooth ; et
la diffusion du message de trame de balise Bluetooth ;
dans lequel le message de trame de balise Bluetooth contient un champ indiquant l'objectif d'interaction,
**caractérisé en ce que** le message de trame de balise Bluetooth comprend un champ d'informations d'événement comprenant une instruction d'événement pour commander le second dispositif Bluetooth ;
le champ d'informations d'événement comprend :
un champ d'identification d'événement indiquant le second dispositif Bluetooth ; et
une instruction d'événement indiquant un événement à exécuter par le second dispositif Bluetooth,
le message de trame de balise est traité au niveau du second dispositif Bluetooth par :
l'exécution d'une instruction d'événement correspondant au second dispositif Bluetooth dans le champ d'informations d'événement sur la base du champ d'informations d'événement ;
ladite exécution d'une instruction d'événement correspondant au second dispositif Bluetooth dans le champ d'informations d'événement sur la base du champ d'informations d'événement comprend :
la détection qu'une identification d'événement dans le champ d'informations d'événement comprend ou non une identification du second dispositif Bluetooth ;
si l'identification d'événement dans le champ d'informations d'événement comprend une identification du second dispositif Bluetooth, l'exécution de l'instruction d'événement correspondant à l'identification du second dispositif Bluetooth.

2. Procédé selon la revendication 1, **caractérisé en ce que** le message de trame de balise Bluetooth contient un champ d'informations de service ; et
le champ d'informations de service comprend au moins l'une de données d'exploitation actuelles du premier dispositif Bluetooth et d'informations de composition de message du message de trame de balise Bluetooth.

3. Procédé selon la revendication 2, **caractérisé en ce que** le champ d'informations de service comprend au moins l'un parmi :
un premier bit indiquant si le premier dispositif Bluetooth a été lié à un autre dispositif Bluetooth ;
un deuxième bit indiquant si le premier dispositif Bluetooth a établi une connexion Bluetooth avec un autre dispositif Bluetooth ;
un troisième bit indiquant si le premier dispositif Bluetooth est un dispositif central ou un dispositif périphérique ;
un quatrième bit indiquant si le message de trame de balise Bluetooth a été crypté ;
un cinquième bit indiquant si le message de trame de balise Bluetooth porte une adresse de contrôle d'accès au support (MAC) du premier dispositif Bluetooth ;
un sixième bit indiquant si le message de trame de balise Bluetooth porte un champ de capacité ;
un septième bit indiquant si le message de trame de balise Bluetooth porte un champ d'informations d'événement ; et
un huitième bit indiquant si le message de trame de balise Bluetooth porte des données définies par le fabricant.

4. Procédé selon la revendication 1, **caractérisé en ce que** le message de trame de balise Bluetooth comprend un champ de capacité indiquant les capacités du premier dispositif Bluetooth.

5. Procédé selon la revendication 4, **caractérisé en ce que** le champ de capacité comprend au moins l'un parmi :
un neuvième bit indiquant si le premier dispositif Bluetooth a la capacité d'établir une connexion Bluetooth ;
un dixième bit indiquant si le premier dispositif Bluetooth a la capacité de servir de dispositif central ;
un onzième bit indiquant si le premier dispositif Bluetooth a une capacité de cryptage ; et
un douzième bit indiquant si le premier dispositif Bluetooth a des capacités d'entrée et de sortie.

6. Procédé selon la revendication 1,
le champ d'informations d'événement comprend :
une instruction d'événement indiquant un événement à exécuter par un second dispositif Bluetooth par défaut.

7. Procédé selon l'une quelconque des revendications 1 à 6, **caractérisé en ce que** le message de trame de balise Bluetooth comprend en outre un champ d'identification de dispositif indiquant un nom de dispositif du premier dispositif Bluetooth ; ou le message de trame de balise Bluetooth comprend en outre un champ d'adresse MAC indiquant une adresse MAC du premier dispositif Bluetooth ; ou le message de trame de balise Bluetooth comprend en outre un champ de commande de trame comprenant au moins l'un parmi :
un treizième bit indiquant si le message de trame de balise Bluetooth porte des données de sous-titre définies par le fabricant ; et
un quatorzième bit indiquant si le message de trame de balise Bluetooth est un message d'accusé de réception de liaison ; ou le message de trame de balise Bluetooth comprend en outre un champ de compteur de trame indiquant une séquence de trames du message de trame de balise Bluetooth.

8. Procédé de réception de message, réalisé par un second dispositif Bluetooth et qui comprend :
la réception d'un message de trame de balise Bluetooth diffusé par un premier dispositif Bluetooth, le message de trame de balise Bluetooth contenant un champ indiquant un objectif d'interaction ; et
le traitement du champ dans le message de trame de balise Bluetooth,
**caractérisé en ce que** le champ indiquant l'objectif d'interaction contient un champ d'informations d'événement,
ledit traitement du champ dans le message de trame de balise Bluetooth comprend :
l'exécution d'une instruction d'événement correspondant au second dispositif Bluetooth dans le champ d'informations d'événement sur la base du champ d'informations d'événement ;
ladite exécution d'une instruction d'événement correspondant au second dispositif Bluetooth dans le champ d'informations d'événement sur la base du champ d'informations d'événement comprend :
la détection qu'une identification d'événement dans le champ d'informations d'événement comprend ou non une identification du second dispositif Bluetooth ;
si l'identification d'événement dans le champ d'informations d'événement comprend une identification du second dispositif Bluetooth, l'exécution de l'instruction d'événement correspondant à l'identification du second dispositif Bluetooth.

9. Procédé selon la revendication 8, **caractérisé en ce que** le message de trame de balise Bluetooth comprend un champ d'informations de service ; et
ledit traitement du champ dans le message de trame de balise Bluetooth comprend :
l'acquisition de données d'exploitation actuelles du premier dispositif Bluetooth sur la base du champ d'informations de service ;
ou l'acquisition d'informations de composition de message du message de trame de balise Bluetooth sur la base du champ d'informations de service ;
ou l'acquisition de données d'exploitation actuelles du premier dispositif Bluetooth sur la base du champ d'informations de service, et l'acquisition d'informations de composition de message du message de trame de balise Bluetooth sur la base du champ d'informations de service.

10. Système comprenant un appareil d'émission de message qui comprend un premier dispositif Bluetooth, comprenant :
un module de génération de message configuré pour générer un message de trame de balise Bluetooth sur la base d'un objectif d'interaction avec un second dispositif Bluetooth ; et
un module d'émission de message configuré pour diffuser le message de trame de balise Bluetooth ;
dans lequel le message de trame de balise Bluetooth contient un champ indiquant l'objectif d'interaction,
**caractérisé en ce que** le message de trame de balise Bluetooth comprend un champ d'informations d'événement comprenant une instruction d'événement pour commander le second dispositif Bluetooth ;
le champ d'informations d'événement comprend :
un champ d'identification d'événement indiquant le second dispositif Bluetooth ; et
une instruction d'événement indiquant un événement à exécuter par le second dispositif Bluetooth,
le système comprenant en outre un appareil de réception de message qui comprend le second dispositif Bluetooth, comprenant :
un module de réception de message configuré pour recevoir le message de trame de balise Bluetooth diffusé par le premier dispositif Bluetooth ; et
un module de traitement de message configuré pour traiter le champ dans le message de trame de balise Bluetooth,
**caractérisé en ce que** l'appareil comprend en outre : un module d'exécution d'instructions configuré pour exécuter une instruction d'événement correspondant à un second dispositif Bluetooth dans le champ d'informations d'événement,
le module d'exécution d'instruction comprend :
un premier sous-module d'identification configuré pour détecter si une identification d'événement dans le champ d'informations d'événement comprend une identification du second dispositif Bluetooth ;
un premier sous-module d'exécution configuré pour, lorsque l'identification d'événement dans le champ d'informations d'événement comprend une identification du second dispositif Bluetooth, exécuter l'instruction d'événement correspondant à l'identification du second dispositif Bluetooth.

11. Appareil de réception de message, comprenant :
un module de réception de message configuré pour recevoir un message de trame de balise Bluetooth diffusé par un premier dispositif Bluetooth, le message de trame de balise Bluetooth contenant un champ indiquant un objectif d'interaction ; et
un module de traitement de message configuré pour traiter le champ dans le message de trame de balise Bluetooth,
**caractérisé en ce que** le champ indiquant l'objectif d'interaction contient un champ d'informations d'événement, l'appareil comprenant en outre : un module d'exécution d'instructions configuré pour exécuter une instruction d'événement correspondant à un second dispositif Bluetooth dans le champ d'informations d'événement,
le module d'exécution d'instruction comprend :
un premier sous-module d'identification configuré pour détecter si une identification d'événement dans le champ d'informations d'événement comprend une identification du second dispositif Bluetooth ;
un premier sous-module d'exécution configuré pour, lorsque l'identification d'événement dans le champ d'informations d'événement comprend une identification du second dispositif Bluetooth, exécuter l'instruction d'événement correspondant à l'identification du second dispositif Bluetooth.

12. Système comprenant un appareil d'émission de message, comprenant :
un processeur ; et
une mémoire configurée pour stocker une instruction exécutable par le processeur,
dans lequel le processeur est configuré pour :
commander un premier dispositif Bluetooth pour générer un message de trame de balise Bluetooth sur la base d'un objectif d'interaction avec un second dispositif Bluetooth ; et
diffuser le message de trame de balise Bluetooth ;
dans lequel le message de trame de balise Bluetooth contient un champ indiquant l'objectif d'interaction,
**caractérisé en ce que** le message de trame de balise Bluetooth comprend un champ d'informations d'événement comprenant une instruction d'événement pour commander le second dispositif Bluetooth ;
le champ d'informations d'événement comprend :
un champ d'identification d'événement indiquant le second dispositif Bluetooth ; et
une instruction d'événement indiquant un événement à exécuter par le second dispositif Bluetooth,
le système comprenant en outre un appareil de réception de message, comprenant :
un processeur ; et
une mémoire configurée pour stocker une instruction exécutable par le processeur,
dans lequel le processeur est configuré pour :
recevoir le message de trame de balise Bluetooth diffusé par le premier dispositif Bluetooth ; et
traiter le champ dans le message de trame de balise Bluetooth,
ledit traitement du champ dans le message de trame de balise Bluetooth comprend :
l'exécution d'une instruction d'événement correspondant au second dispositif Bluetooth dans le champ d'informations d'événement sur la base du champ d'informations d'événement ;
ladite exécution d'une instruction d'événement correspondant au second dispositif Bluetooth dans le champ d'informations d'événement sur la base du champ d'informations d'événement comprend :
la détection qu'une identification d'événement dans le champ d'informations d'événement comprend ou non une identification du second dispositif Bluetooth ;
lorsque l'identification d'événement dans le champ d'informations d'événement comprend une identification du second dispositif Bluetooth, l'exécution de l'instruction d'événement correspondant à l'identification du second dispositif Bluetooth.

13. Appareil de réception de message, comprenant :
un processeur ; et
une mémoire configurée pour stocker une instruction exécutable par le processeur,
dans lequel le processeur est configuré pour :
recevoir un message de trame de balise Bluetooth diffusé par un premier dispositif Bluetooth, le message de trame de balise Bluetooth contenant un champ indiquant un objectif d'interaction ; et
traiter le champ dans le message de trame de balise Bluetooth,
**caractérisé en ce que** le champ indiquant l'objectif d'interaction contient un champ d'informations d'événement,
ledit traitement du champ dans le message de trame de balise Bluetooth comprend :
l'exécution d'une instruction d'événement correspondant au second dispositif Bluetooth dans le champ d'informations d'événement sur la base du champ d'informations d'événement ;
ladite exécution d'une instruction d'événement correspondant au second dispositif Bluetooth dans le champ d'informations d'événement sur la base du champ d'informations d'événement comprend :
la détection qu'une identification d'événement dans le champ d'informations d'événement comprend ou non une identification du second dispositif Bluetooth ;
lorsque l'identification d'événement dans le champ d'informations d'événement comprend une identification du second dispositif Bluetooth, l'exécution de l'instruction d'événement correspondant à l'identification du second dispositif Bluetooth.

14. Programme d'ordinateur incluant des instructions pour exécuter les étapes d'un procédé d'émission de message selon l'une quelconque des revendications 1 à 7 lorsque ledit programme est exécuté par un ordinateur.

15. Support d'enregistrement lisible par un ordinateur et sur lequel est enregistré un programme d'ordinateur incluant des instructions pour exécuter les étapes d'un procédé d'émission de message selon l'une quelconque des revendications 1 à 7.
